# EUROPEAN PATENT APPLICATION

(11) **EP 4 393 806 A2**
(43) Date of publication of application: **03.07.2024**
(21) Application number: 23216389.9
(22) Date of filing: 13.12.2023
(51) Int. Cl.: B62M 11/04, B62M 9/04, B62M 6/55, B62M 6/65, B62M 11/14, B62M 11/16, B62M 11/18

(54) **DRIVE UNIT FOR HUMAN-POWERED VEHICLE**

(30) Priority: 27.12.2022 JP 2022210927
(71) Applicant: Shimano Inc., Sakai City, Osaka 590-8577 (JP)
(72) Inventor: Yamaguchi, Sota, Sakai City, 590-8577 (JP)
(74) Representative: Sonnenberg Harrison Partnerschaft mbB

(57) **Abstract**

A drive unit (50) for a human-powered vehicle is provided on an axle (12) of a wheel (14) of the human-powered vehicle. The drive unit comprises a speed increaser (24) configured to receive human driving force, a transmission device (30) including transmission stages and configured to receive the human driving force via the speed increaser, and a speed reducer (34) configured to receive the human driving force via the transmission device.

## Description

### BACKGROUND

This application claims priority of Japanese patent application JP 2022-210927, filed on 27 December 2022. The entire disclosure of the Japanese patent application JP 2022-210927 is hereby incorporated herein by reference.

The present disclosure relates to a drive unit for a human-powered vehicle.

Japanese Laid-Open Patent Publication No. 2011-016479 discloses an example of a drive unit that includes a transmission device.

### SUMMARY OF THE DISCLOSURE

One objective of the present disclosure is to provide a drive unit for a human-powered vehicle that transmits human driving force in a preferred manner.

A drive unit in accordance with a first aspect of the present disclosure is for a human-powered vehicle provided on an axle of a wheel of the human-powered vehicle. The drive unit comprises a speed increaser configured to receive human driving force, a transmission device including transmission stages and configured to receive the human driving force via the speed increaser, and a speed reducer configured to receive the human driving force via the transmission device.

In the drive unit according to the first aspect, torque of human driving force received by the transmission device from the speed increaser is decreased by the speed increaser. This allows the transmission device to perform shifting in a preferred manner. Thus, the drive unit transmits human driving force in a preferred manner. In the drive unit according to the first aspect, the speed reducer is provided downstream of the transmission device in the transmission path of human driving force. Thus, the load on the rider is reduced. The drive unit according to the first aspect includes the speed increaser and the transmission device. This allows the transmission path of human driving force to be shortened between the speed increaser and the transmission device. Thus, the drive unit transmits human driving force from the speed increaser to the transmission device in a preferred manner.

In accordance with a second aspect of the present disclosure, the drive unit according to the first aspect is configured so that the speed reducer has a reduction ratio that is greater than 0 and 0.8 or less.

The drive unit according to the second aspect transmits human driving force in a further preferred manner.

In accordance with a third aspect of the present disclosure, the drive unit according to the second aspect is configured so that the reduction ratio is 0.1 or greater and 0.5 or less.

The drive unit according to the third aspect transmits human driving force in a further preferred manner.

In accordance with a fourth aspect of the present disclosure, the drive unit according to the third aspect is configured so that the reduction ratio is 0.15 or greater and 0.3 or less.

The drive unit according to the fourth aspect transmits human driving force in a further preferred manner.

In accordance with a fifth aspect of the present disclosure, the drive unit according to any one of the first to fourth aspects is configured so that at least one of the speed increaser, the transmission device, and the speed reducer includes a metal material.

With the drive unit according to the fifth aspect, the rigidity of at least one of the speed increaser, the transmission device, and the speed reducer is ensured by the metal material.

In accordance with a sixth aspect of the present disclosure, the drive unit according to any one of the first to fifth aspects is configured so that at least one of the speed increaser, the transmission device, and the speed reducer includes resin material.

With the drive unit according to the sixth aspect, at least one of the speed increaser, the transmission device, and the speed reducer is readily formed from the resin material.

A drive unit in accordance with a seventh aspect of the present disclosure is for a human-powered vehicle. The drive unit comprises a speed increaser configured to receive human driving force and a transmission device including transmission stages and configured to receive the human driving force via the speed increaser. The speed increaser has a speed-increasing ratio of 3 or greater and 11 or less.

In the drive unit according to the seventh aspect, torque of human driving force received by the transmission device from the speed increaser is decreased by the speed increaser. This allows the transmission device to perform shifting in a preferred manner. Thus, the drive unit transmits human driving force in a preferred manner. With the drive unit according to the seventh aspect, after torque of human driving force is reduced by the speed increaser having the speed-increasing ratio of 3 or greater and 11 or less, the human driving force is input to the transmission device. Thus, the transmission device performs shifting in a preferred manner. The drive unit according to the seventh aspect includes the speed increaser and the transmission device. This allows the transmission path of human driving force to be shortened between the speed increaser and the transmission device. Thus, the drive unit transmits human driving force from the speed increaser to the transmission device in a preferred manner.

In accordance with an eighth aspect of the present disclosure, the drive unit according to the seventh aspect is configured so that the speed increaser includes at least one of a gear, a pulley, and an endless annular member.

With the drive unit according to the eighth aspect, speed is increased by at least one of a gear, a pulley, and an endless annular member.

In accordance with a ninth aspect of the present disclosure, the drive unit according to any one of the first to eighth aspects is configured so that the transmission stages each have a different transmission ratio. The transmission device includes a transmission device input unit configured to receive the human driving force, and a transmission device output unit configured to output the human driving force. The transmission ratio is a ratio of a rotational speed of the transmission device output unit to a rotational speed of the transmission device input unit. A ratio of a maximum transmission ratio of the transmission ratios of the transmission stages to a minimum transmission ratio of the transmission ratios of the transmission stages is 1.2 or greater and 8 or less.

The drive unit according to the ninth aspect transmits human driving force in a further preferred manner.

In accordance with a tenth aspect of the present disclosure, the drive unit according to the ninth aspect is configured so that the ratio of the maximum transmission ratio to the minimum transmission ratio is 1.7 or greater and 7 or less.

The drive unit according to the tenth aspect transmits human driving force in a further preferred manner.

In accordance with an eleventh aspect of the present disclosure, the drive unit according to the tenth aspect is configured so that the ratio of the maximum transmission ratio to the minimum transmission ratio is 2.4 or greater and 6 or less.

The drive unit according to the eleventh aspect transmits human driving force in a further preferred manner.

In accordance with a twelfth aspect of the present disclosure, the drive unit according to any one of the first to eleventh aspects is configured so that the transmission stages each have a different transmission ratio. The transmission device includes a transmission device input unit configured to receive the human driving force and a transmission device output unit configured to output the human driving force. The transmission ratio is a ratio of a rotational speed of the transmission device output unit to a rotational speed of the transmission device input unit. The transmission stages include a first transmission stage of which the transmission ratio is a first ratio and a second transmission stage of which the transmission stage is a second ratio. The second ratio is the one of the transmission ratios of the transmission stages that is greater than the first ratio and closest to the first ratio. A ratio of the first ratio to the second ratio is 0.75 or greater and less than 1.

The drive unit according to the twelfth aspect transmits human driving force in a further preferred manner.

In accordance with a thirteenth aspect of the present disclosure, the drive unit according to the twelfth aspect is configured so that the ratio of the first ratio to the second ratio is 0.8 or greater and less than 1.

The drive unit according to the thirteenth aspect transmits human driving force in a further preferred manner.

In accordance with a fourteenth aspect of the present disclosure, the drive unit according to the thirteenth aspect is configured so that the ratio of the first ratio to the second ratio is 0.85 or greater and less than 1.

The drive unit according to the fourteenth aspect transmits human driving force in a further preferred manner.

A drive unit in accordance with a fifteenth aspect of the present disclosure is for a human-powered vehicle. The drive unit comprises a speed increaser configured to receive human driving force. The speed increaser includes a speed increaser rotation input unit configured to receive the human driving force and a speed increaser rotation output unit configured to output the human driving force. The speed increaser rotation input unit includes a speed increaser input rotational axis. The speed increaser rotation output unit includes a speed increaser output rotational axis aligned coaxially with the speed increaser input rotational axis. The speed increaser has a speed-increasing ratio of 3 or greater and 20 or less.

With the drive unit according to the fifteenth aspect, torque is decreased downstream of the speed increaser in the transmission path of human driving force. This allows for reduction in the backlash of a member included downstream of the speed increaser in the transmission path of human driving force. Thus, the drive unit transmits human driving force in a preferred manner. With the drive unit according to the fifteenth aspect, speed is increased by the speed increaser having the speed-increasing ratio of 3 or greater and 20 or less.

In accordance with a sixteenth aspect of the present disclosure, the drive unit according to any one of the seventh, eighth, and fifteenth aspects is configured so that the speed-increasing ratio is 5 or greater and 18 or less.

The drive unit according to the sixteenth aspect transmits human driving force in a further preferred manner.

In accordance with a seventeenth aspect of the present disclosure, the drive unit according to the sixteenth aspect is configured so that the speed-increasing ratio is 7 or greater and 16 or less.

The drive unit according to the seventeenth aspect transmits human driving force in a further preferred manner.

In accordance with an eighteenth aspect of the present disclosure, the drive unit according to the seventeenth aspect is configured so that the speed-increasing ratio is 9 or greater and 14 or less.

The drive unit according to the eighteenth aspect transmits human driving force in a further preferred manner.

A drive unit in accordance with a nineteenth aspect of the present disclosure is for a human-powered vehicle. The drive unit comprises a speed increaser configured to receive human driving force. The speed increaser has a speed-increasing ratio of 6 or greater and 20 or less.

The drive unit according to the nineteenth aspect transmits human driving force in a further preferred manner.

In accordance with a twentieth aspect of the present disclosure, the drive unit according to any one of the first to nineteenth aspects further comprises a crank axle of the human-powered vehicle.

With the drive unit according to the twentieth aspect, the speed increaser can be provided around the crank axle.

In accordance with a twenty-first aspect of the present disclosure, the drive unit according to any one of the first to twentieth aspects further comprises a motor configured to apply propulsion force to the human-powered vehicle.

With the drive unit according to the twenty-first aspect, the motor assists in propulsion of the human-powered vehicle.

According to the present disclosure, the drive unit for a human-powered vehicle transmits human driving force in a preferred manner.

### BRIEF DESCRIPTION OF THE DRAWINGS

Fig. 1 is a diagram showing a human-powered vehicle including a first embodiment of a drive system for a human-powered vehicle and a drive unit for a human-powered vehicle.
Fig. 2 is a side view of a drive mechanism of the human-powered vehicle shown in Fig. 1.
Fig. 3 is a cross-sectional view of the drive unit of the human-powered vehicle shown in Fig. 2 taken along line 3-3.
Fig. 4 is a block diagram showing a transmission path of human driving force and motor driving force in the human-powered vehicle shown in Fig. 1.
Fig. 5 is a first table showing examples of configurations of the drive system for a human-powered vehicle and the drive unit for a human-powered vehicle shown in Fig. 1.
Fig. 6 is a second table showing examples of configurations of the drive system for a human-powered vehicle and the drive unit for a human-powered vehicle shown in Fig. 1.
Fig. 7 is a third table showing examples of configurations of the drive system for a human-powered vehicle and the drive unit for a human-powered vehicle shown in Fig. 1.
Fig. 8 is a fourth table showing examples of configurations of the drive system for a human-powered vehicle and the drive unit for a human-powered vehicle shown in Fig. 1.
Fig. 9 is a diagram showing a human-powered vehicle including a second embodiment of a drive system for a human-powered vehicle and a drive unit for a human-powered vehicle.
Fig. 10 is a diagram showing a transmission device shown in Fig. 9.
Fig. 11 is a diagram showing a human-powered vehicle including a third embodiment of a drive system for a human-powered vehicle and a drive unit for a human-powered vehicle.
Fig. 12 is a diagram showing a human-powered vehicle including a fourth embodiment of a drive system for a human-powered vehicle and a drive unit for a human-powered vehicle.
Fig. 13 is a side view showing a drive mechanism of a fifth embodiment of a human-powered vehicle including a drive system for a human-powered vehicle and a drive unit for a human-powered vehicle.
Fig. 14 is a diagram of the human-powered vehicle shown in Fig. 13.
Fig. 15 is a block diagram showing a transmission path of human driving force and motor driving force in a first modified example of a human-powered vehicle.
Fig. 16 is a diagram showing a human-powered vehicle including a second modified example of a drive system for a human-powered vehicle and a drive unit for a human-powered vehicle.
Fig. 17 is a diagram showing a human-powered vehicle including a third modified example of a drive system for a human-powered vehicle and a drive unit for a human-powered vehicle.
Fig. 18 is a side view showing a drive mechanism of a human-powered vehicle including a fourth modified example of a drive system for a human-powered vehicle and a drive unit for a human-powered vehicle.
Fig. 19 is a diagram showing a human-powered vehicle including a fifth modified example of a drive system for a human-powered vehicle and a drive unit for a human-powered vehicle.
Fig. 20 is a side view showing a drive mechanism of a human-powered vehicle including a sixth modified example of a drive system for a human-powered vehicle and a drive unit for a human-powered vehicle.

### EMBODIMENTS OF THE DISCLOSURE

### First Embodiment

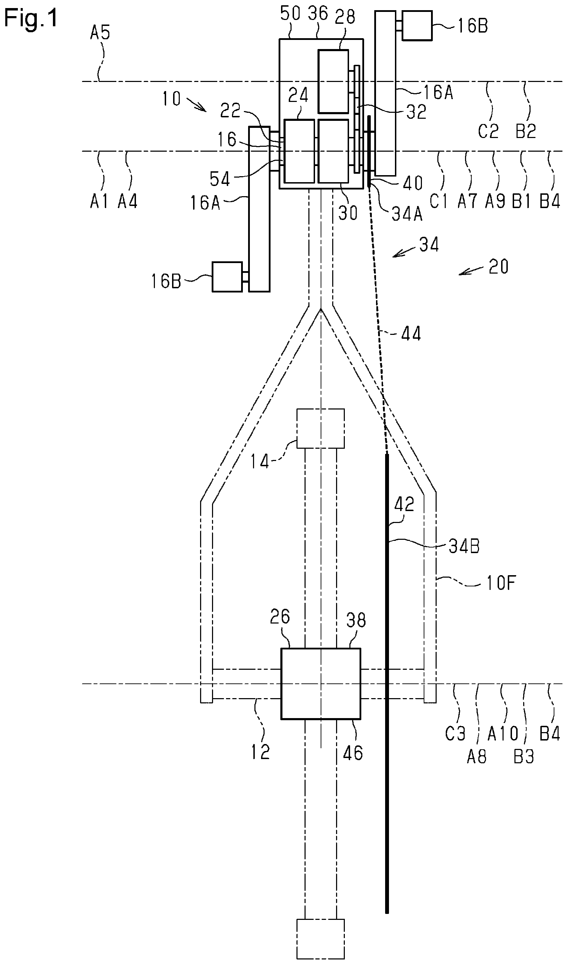

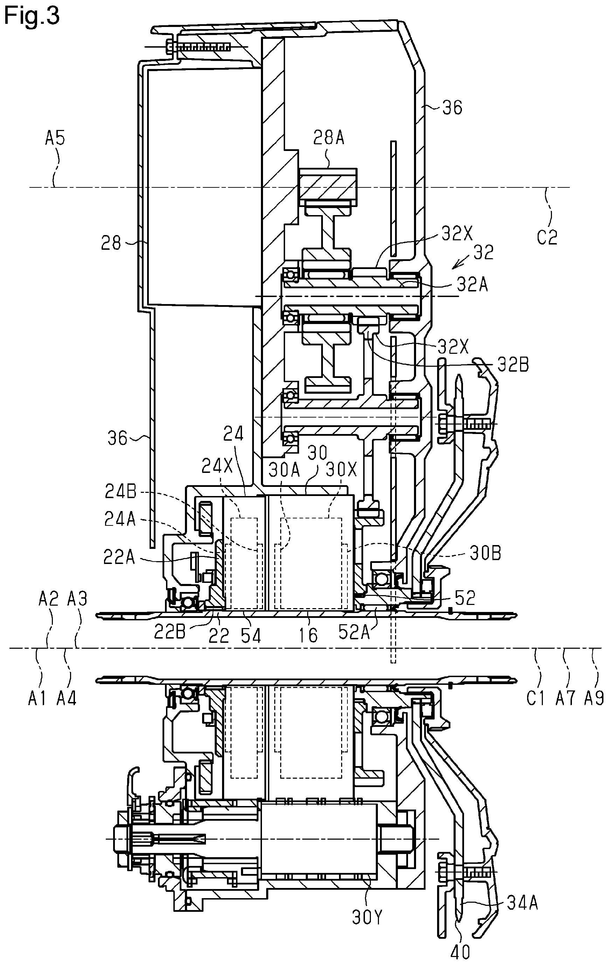

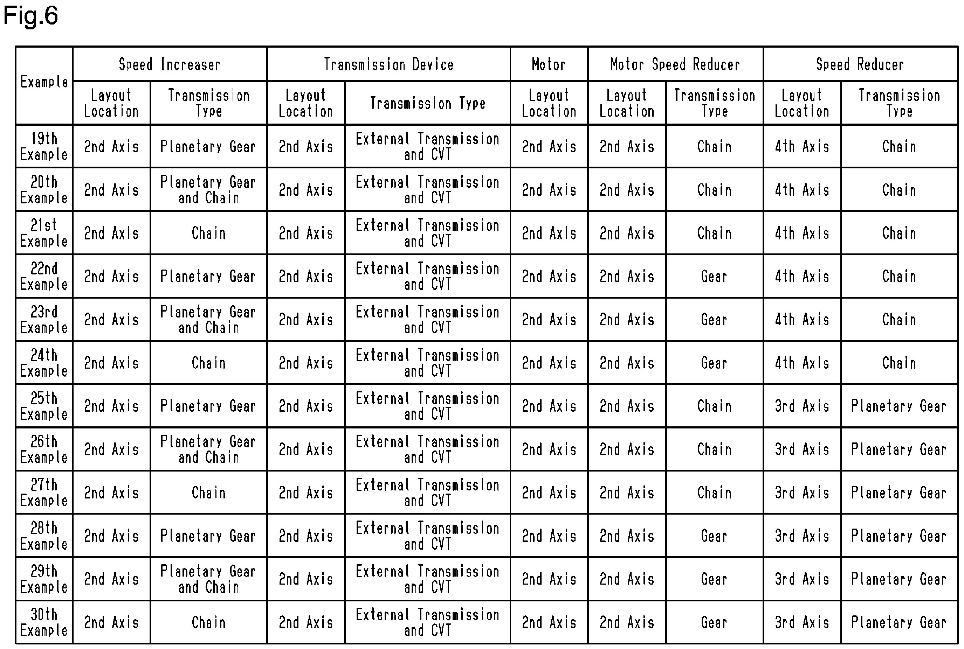

A first embodiment of a drive system 20 for a human-powered vehicle and a drive unit 50 for a human-powered vehicle will now be described with reference to Figs. 1 to 8.

A human-powered vehicle 10 is a vehicle including at least one wheel and driven by at least human driving force. The human-powered vehicle 10 includes, for example, various types of bicycles such as a mountain bike, a road bike, a city bike, a cargo bike, a hand bike, and a recumbent bike. The number of wheels on the human-powered vehicle 10 is not limited. The human-powered vehicle 10 includes, for example, a unicycle and a vehicle including two or more wheels. The human-powered vehicle 10 is not limited to a vehicle configured to be driven only by human driving force. The human-powered vehicle 10 includes an E-bike that uses driving force of an electric motor in addition to human driving force for propulsion. The E-bike includes an electric assist bicycle that assists in propulsion with an electric motor. In the embodiments described below, the human-powered vehicle 10 refers to a bicycle.

The human-powered vehicle 10 includes an axle 12 and a wheel 14. The axle 12 is provided on a frame 10F of the human-powered vehicle 10. The wheel 14 is provided on the axle 12 so as to rotate about the axle 12 in accordance with human driving force. The human-powered vehicle 10 includes a crank axle 16 rotatable relative to the frame 10F of the human-powered vehicle 10. Two crank arms 16A are provided on respective axial ends of the crank axle 16. Two pedals 16B are respectively coupled to the two crank arms 16A. Human driving force is input to the crank axle 16 from the crank arms 16A and the pedals 16B.

In an example, the drive system 20 is for driving the human-powered vehicle 10. In an example, the drive system 20 includes at least a portion of a transmission path of human driving force in the human-powered vehicle 10. In an example, the drive system 20 includes the transmission path of human driving force from the crank axle 16 to the wheel 14. In an example, the drive system 20 includes the drive unit 50 for a human-powered vehicle. In the present embodiment, the drive unit 50 is disposed around the crank axle 16. The drive unit 50 can be provided on the axle 12 of the wheel 14.

In an example, the drive system 20 includes a rotation input unit 22, a speed increaser 24, a rotation output unit 26, and a motor 28. The rotation input unit 22 is configured to receive human driving force. In an example, the rotation input unit 22 includes the crank axle 16. The rotation output unit 26 is configured to receive human driving force via the rotation input unit 22 and output human driving force to the wheel 14 of the human-powered vehicle 10. In an example, the rotation output unit 26 is connected to the wheel 14. In an example, the rotation output unit 26 includes a hub shell 38.

The speed increaser 24 is provided in the transmission path of human driving force. The speed increaser 24 is configured to receive human driving force. The speed increaser 24 is configured to receive human driving force via the rotation input unit 22.

In an example, the drive system 20 further includes a transmission device 30. The transmission device 30 is provided in the transmission path of human driving force. The transmission device 30 is configured to receive human driving force via the rotation input unit 22. In an example, the transmission device 30 is configured to shift a transmission ratio of the human-powered vehicle 10. The transmission ratio is a ratio of speed of rotation output from the transmission device 30 to speed of rotation input to the transmission device 30. As the transmission ratio increases, the output rotational speed increases.

In this specification, a speed ratio R refers to a ratio of an output rotational speed S2 of a corresponding device to an input rotational speed S1 of the device. The speed ratio R is expressed by equation of "R = S2 / S1." The speed ratio R includes a transmission ratio, a speed-increasing ratio, a reduction ratio, and a motor reduction ratio. In a case where S1 = S2, the transmission ratio, the speed-increasing ratio, the reduction ratio, and the motor reduction ratio are 1. In a case where S1 < S2, the transmission ratio, the speed-increasing ratio, and the reduction ratio are greater than 1. In a case where S 1 > S2, the transmission ratio, the speed-increasing ratio, the reduction ratio, and the motor reduction ratio are less than 1. In this specification, as the speed-increasing ratio increases, a speed-increasing degree increases. In this specification, as the reduction ratio increases, a reduction degree decreases. In this specification, as the motor reduction ratio increases, the reduction degree decreases.

In an example, the drive system 20 further includes a speed reducer 34. The speed reducer 34 is provided in the transmission path of human driving force. The speed reducer 34 is provided in the transmission path of human driving force between the rotation input unit 22 and the rotation output unit 26.

The motor 28 is configured to apply propulsion force to the human-powered vehicle 10. In an example, the drive system 20 includes at least a portion of a transmission path of motor driving force of the motor 28. In an example, the drive system 20 includes the transmission path of motor driving force from the motor 28 to the wheel 14. In an example, the transmission path of motor driving force joins with the transmission path of human driving force. The transmission path from where the transmission path of motor driving force joins with the transmission path of human driving force includes both the transmission path of human driving force and the transmission path of motor driving force.

In an example, the drive system 20 further includes a housing 36. In an example, at least one of the driving force transmission members of the drive system 20 is provided in the housing 36. In an example, the housing 36 is a housing of the drive unit 50.

In an example, the drive system 20 includes the hub shell 38. The hub shell 38 is formed separately from the housing 36. In a case where the drive unit 50 is provided on the axle 12 of the wheel 14, the hub shell 38 can be formed integrally with the housing 36. In an example, the drive system 20 includes a rear hub 46. In the present embodiment, the hub shell 38 is a hub shell 38 of the rear hub 46.

In an example, the drive system 20 includes a drive rotation input unit 40, a drive rotation output unit 42, and an endless annular member 44. The drive rotation input unit 40 is configured to receive human driving force. The drive rotation output unit 42 is configured to output human driving force. The endless annular member 44 couples the drive rotation input unit 40 and the drive rotation output unit 42. In an example, the drive rotation input unit 40 includes one of a sprocket and a pulley. In an example, the drive rotation output unit 42 includes one of a sprocket and a pulley. In an example, the endless annular member 44 includes at least one of a chain and a belt. In the present embodiment, the drive rotation input unit 40 includes a sprocket, the drive rotation output unit 42 includes a sprocket, and the endless annular member 44 includes a chain. In an example, the sprocket of the drive rotation input unit 40 includes a front sprocket, and the sprocket of the drive rotation output unit 42 includes a rear sprocket.

In the present embodiment, the speed reducer 34 includes the drive rotation input unit 40, the drive rotation output unit 42, and the endless annular member 44. The number of sprocket teeth of the drive rotation input unit 40 is less than the number of sprocket teeth of the drive rotation output unit 42. In an example the sprocket of the drive rotation input unit 40 has nine teeth. In an example, the sprocket of the drive rotation output unit 42 includes sixty teeth.

The drive unit 50 includes at least one of the driving force transfer members of the drive system 20. In an example, the drive unit 50 includes the speed increaser 24 and the transmission device 30. In an example, the drive unit 50 includes the motor 28 and a motor speed reducer 32. In an example, the drive unit 50 further includes the rotation input unit 22. In an example, the drive unit 50 further includes the crank axle 16 of the human-powered vehicle 10. In an example, the drive unit 50 further includes a net force unit 52.

The drive unit 50 can further include the speed reducer 34. In a case where the drive unit 50 includes the speed reducer 34, the speed reducer 34 can include a first speed reducer including the drive rotation input unit 40, the drive rotation output unit 42, and the endless annular member 44 and a second speed reducer differing from the first speed reducer. The drive unit 50 can include the second speed reducer. The speed reducer 34 can include the second speed reducer without including the first speed reducer. In a case where the speed reducer 34 does not include the first speed reducer and includes the second speed reducer, the drive rotation input unit 40, the drive rotation output unit 42, and the endless annular member 44 do not necessarily have to form the speed reducer 34. In a case where the drive unit 50 includes the speed reducer 34, at least part of the drive rotation input unit 40 can be provided on the drive unit 50.

In an example, the housing 36 is provided on the frame 10F of the human-powered vehicle 10. In the present embodiment, the housing 36 is configured to support an input rotation shaft 54 that receives human driving force. In an example, human driving force is input to the input rotation shaft 54. In the present embodiment, the input rotation shaft 54 is the crank axle 16. The input rotation shaft 54 is provided on the housing 36 and is rotatable relative to the housing 36 about an input center axis C1. In an example, the input center axis C1 is substantially coaxial with a rotational axis of the input rotation shaft 54. In this specification, the description of "substantially coaxial" refers to being completely coaxial or being considered to be completely coaxial. The case of being considered to be completely coaxial is, for example, a case where not being coaxial has only a negligible effect on the functions of the drive system 20 and the drive unit 50. At least a portion of the crank axle 16 is provided on the housing 36.

In an example, the rotation input unit 22, the speed increaser 24, the motor 28, and the speed reducer 34 are provided on the housing 36. In the present embodiment, at least a portion of the rotation input unit 22, the speed increaser 24, the transmission device 30, the motor 28, and the motor speed reducer 32 are provided in an inner cavity of the housing 36. In the present embodiment, at least part of the speed reducer 34 is provided on the housing 36.

The rotation input unit 22 is configured to be rotatable about the input center axis C1. In an example, the rotation input unit 22 is provided on the housing 36 and is rotatable relative to the housing 36 about the input center axis C1. In the present embodiment, the rotation input unit 22 includes the input rotation shaft 54. In an example, the rotation input unit 22 includes an input transfer portion 22A connecting the crank axle 16 and the speed increaser 24.

For example, the drive unit 50 includes a first one-way clutch 22B. In an example, the first one-way clutch 22B is provided between the rotation input unit 22 and the input transfer portion 22A. The first one-way clutch 22B transmits rotational torque from the crank axle 16 to the rotation input unit 22 in a case where the crank axle 16 is rotated in a direction in which the human-powered vehicle 10 moves forward, and restricts transmission of rotational torque from the rotation input unit 22 to the crank axle 16 in a case where the rotation input unit 22 is rotated in a direction in which the human-powered vehicle 10 moves forward. In an example, the first one-way clutch 22B includes at least one of a roller clutch and a pawl-type clutch. In an example, the first one-way clutch 22B includes an inner ring and an outer ring. The inner ring can be formed integrally with the rotation input unit 22. Alternatively, the inner ring can be formed separately from the rotation input unit 22 and coupled to the rotation input unit 22 so as to rotate integrally with the rotation input unit 22. In a case where the inner ring is formed separately from the rotation input unit 22, the inner ring is coupled to the rotation input unit 22 by, for example, a spline. The outer ring can be formed integrally with the input transfer portion 22A. Alternatively, the outer ring can be formed separately from the input transfer portion 22A and coupled to the input transfer portion 22A so as to rotate integrally with the input transfer portion 22A. In a case where the outer ring is formed separately from the input transfer portion 22A, the outer ring is coupled to the input transfer portion 22A by, for example, a spline.

The transmission device 30 is configured to receive human driving force via the input rotation shaft 54. In an example, the transmission device 30 is configured to receive human driving force via the speed increaser 24. In an example, the transmission device 30 is configured to output human driving force to the speed reducer 34.

The speed reducer 34 is configured to receive human driving force via the speed increaser 24. The speed reducer 34 is configured to receive human driving force via the transmission device 30.

The rotation input unit 22, the speed increaser 24, the transmission device 30, the net force unit 52, the speed reducer 34, and the rotation output unit 26 form a portion of the transmission path of human driving force. In the present embodiment, human driving force is sequentially transmitted through the rotation input unit 22, the speed increaser 24, the transmission device 30, the speed reducer 34, and the rotation output unit 26. The motor speed reducer 32, the net force unit 52, the speed reducer 34, and the rotation output unit 26 form a portion of the transmission path of motor driving force. In the present embodiment, motor driving force is transmitted to a location between the transmission device 30 and the speed reducer 34. In the present embodiment, the motor 28 is configured to output motor driving force to the net force unit 52 in the transmission path of human driving force.

In an example, the speed increaser 24 is provided on the housing 36. In an example, the speed increaser 24 includes at least one of a gear, a pulley, and an endless annular member. In the present embodiment, the speed increaser 24 includes a gear. In an example, the speed increaser 24 includes a planetary gear mechanism 24X. The speed increaser 24 can include gears each having a different rotational center axis in addition to or instead of the planetary gear mechanism 24X. In a case where the speed increaser 24 includes a pulley, the speed increaser 24 can include a belt-type speed-increasing mechanism. In a case where the speed increaser 24 includes an endless annular member, the speed increaser 24 can include a chain-type speed increasing mechanism.

The speed increaser 24 includes a speed increaser rotational center axis A1, a speed increaser rotation input unit 24A, and a speed increaser rotation output unit 24B. The speed increaser rotation input unit 24A is configured to receive human driving force. The speed increaser rotation output unit 24B is configured to output human driving force. The speed increaser rotation input unit 24A is rotatable about the speed increaser rotational center axis A1. The speed increaser rotation output unit 24B is rotatable about the speed increaser rotational center axis A1. In the present embodiment, the speed increaser rotational center axis A1 is substantially coaxial with the input center axis C1. The speed increaser rotation input unit 24A includes a speed increaser input rotational axis A2. The speed increaser rotation output unit 24B includes a speed increaser output rotational axis A3. The speed increaser output rotational axis A3 is coaxial with the speed increaser input rotational axis A2. In the present embodiment, the speed increaser input rotational axis A2 and the speed increaser output rotational axis A3 are substantially coaxial with the speed increaser rotational center axis A1. The speed increaser 24 is configured to increase rotational speed of the speed increaser rotation input unit 24A in accordance with the speed-increasing ratio and output the rotation from the speed increaser rotation output unit 24B.

In an example, the speed-increasing ratio of the speed increaser 24 is a ratio of rotational speed of the speed increaser rotation output unit 24B to rotational speed of the speed increaser rotation input unit 24A. As the speed-increasing ratio of the speed increaser 24 increases, a speed-increasing degree of the speed increaser 24 increases.

In an example, the speed-increasing ratio of the speed increaser 24 is greater than or equal to 3 and less than or equal to 20. In an example, the speed-increasing ratio of the speed increaser 24 is greater than or equal to 5 and less than or equal to 18. In an example, the speed-increasing ratio of the speed increaser 24 is greater than or equal to 7 and less than or equal to 16. In an example, the speed-increasing ratio of the speed increaser 24 is greater than or equal to 9 and less than or equal to 14. In an example, the speed-increasing ratio of the speed increaser 24 is 9.4.

The speed-increasing ratio of the speed increaser 24 can be greater than or equal to 3 and less than or equal to 11. The speed-increasing ratio of the speed increaser 24 can be greater than or equal to 6 and less than or equal to 20. In an example, the speed-increasing ratio of the speed increaser 24 is 6.032.

In an example, the transmission device 30 is provided on the housing 36. The transmission device 30 includes a transmission device rotational center axis A4, a transmission device rotation input unit 30A, and a transmission device rotation output unit 30B. The transmission device rotation input unit 30A is rotatable about the transmission device rotational center axis A4. The transmission device rotation output unit 30B is rotatable about the transmission device rotational center axis A4. The transmission device rotational center axis A4 is substantially coaxial with the input center axis C1. The transmission device 30 is configured to change the speed of rotation received from the transmission device rotation input unit 30A and output the rotation from the transmission device rotation output unit 30B in accordance with the transmission ratio of the transmission device 30. The transmission device rotation output unit 30B is configured to output human driving force to the net force unit 52.

In an example, the transmission device 30 includes a transmission device input unit 30C and a transmission device output unit 30D. In an example, the transmission device input unit 30C is configured to receive human driving force. In an example, the transmission device output unit 30D is configured to output human driving force. In an example, the transmission device input unit 30C includes the transmission device rotation input unit 30A, and the transmission device output unit 30D includes the transmission device rotation output unit 30B.

In an example, the transmission ratio of the transmission device 30 is a ratio of rotational speed of the transmission device output unit 30D to rotational speed of the transmission device input unit 30C. In an example, the transmission ratio of the transmission device 30 is a ratio of rotational speed of the transmission device rotation output unit 30B to rotational speed of the transmission device rotation input unit 30A. In an example, the transmission device 30 is configured to shift the transmission ratio within a range from a minimum transmission ratio to a maximum transmission ratio. The minimum transmission ratio is a transmission ratio corresponding to a speed decrease. The maximum transmission ratio is a transmission ratio corresponding to a speed increase. In an example, the minimum transmission ratio is greater than 0 and less than 1. As the minimum transmission ratio decreases, the speed-increasing degree becomes smaller in a case where the transmission ratio is the minimum transmission ratio. In an example, the maximum transmission ratio is greater than 1 and less than or equal to 5. As the maximum transmission ratio increases, the speed-increasing degree becomes larger in a case where the transmission ratio is the maximum transmission ratio.

In the present embodiment, the transmission device 30 is configured to shift the transmission ratio in a stepped manner. In an example, the transmission device 30 includes multiple transmission stages. In an example, the transmission stages each have a different transmission ratio. The transmission stage is changed from one to another one of the transmission stages to shift the transmission ratio of the transmission device 30. In an example, the transmission device 30 includes a planetary gear mechanism 30X. The transmission device 30 can include a manual transmission device including a clutch plate instead of or in addition to the planetary gear mechanism 30X. The transmission device 30 can be configured to shift the transmission ratio in a stepless manner. In a case where the transmission ratio is shifted in a stepless manner, the transmission device 30 includes a continuously variable transmission (CVT). In an example, the transmission device 30 includes a transmission switch 30Y configured to shift the transmission ratio of the transmission device 30. The transmission switch 30Y can be controlled by an electric actuator or can be controlled by a mechanical cable connected to a shifter operable by a rider. An example of the transmission device 30 is the transmission device disclosed in Japanese Laid-Open Patent Publication No. 2016-78618. As long as the transmission device 30 includes multiple transmission stages, various types of transmission devices such as a planetary gear type transmission, a ball type continuously variable transmission, and a parallel-axis gear transmission can be used. The transmission device is not limited to a particular type.

In an example, the ratio of the maximum transmission ratio of the transmission ratios of the transmission stages to the minimum transmission ratio of the transmission ratios of the transmission stages is 1.2 or greater and 8 or less. In an example, the ratio of the maximum transmission ratio to the minimum transmission ratio is 1.7 or greater and 7 or less. In an example, the ratio of the maximum transmission ratio to the minimum transmission ratio is 2.4 or greater and 6 or less. In an example, the ratio of the maximum transmission ratio to the minimum transmission ratio is 2.4.

In an example, the planetary gear mechanism 30X is configured to shift the transmission ratio in three or more steps. In an example, the transmission stages include three or more transmission stages. In an example, the three or more transmission stages each have a different transmission ratio.

In an example, the transmission stages includes a first transmission stage and a second transmission stage. In an example, the transmission ratio of the first transmission stage is a first ratio. In an example, the transmission ratio of the second transmission stage is a second ratio. In an example, the second ratio is one of the transmission ratios of the transmission stages that is greater than the first ratio and closest to the first ratio. In an example, the first transmission stage and the second transmission stage correspond to any two transmission stages of the transmission stages that satisfy a condition. The first transmission stage corresponds to one of the transmission stages differing from the transmission stage having the largest transmission ratio. The second transmission stage corresponds to one of the transmission stages having a transmission ratio that is greater than the transmission ratio of the first transmission stage and is closest to the transmission ratio of the first transmission stage. In an example, the ratio of the first ratio to the second ratio is greater than or equal to 0.75 and less than 1. In an example, the ratio of the first ratio to the second ratio is greater than or equal to 0.8 and less than 1. In an example, the ratio of the first ratio to the second ratio is greater than or equal to 0.85 and less than 1. In an example, the ratio of the first ratio to the second ratio is 0.85.

The motor 28 is configured to input motor driving force to the speed reducer 34. The motor 28 is configured to output motor driving force to a location between the speed increaser 24 and the speed reducer 34 in the transmission path of human driving force. In an example, the motor 28 is configured to output motor driving force to a location downstream of the speed increaser 24 in the transmission path of human driving force. In an example, the motor 28 is configured to output motor driving force to a location between the speed increaser 24 and the rotation output unit 26 in the transmission path of human driving force.

The motor 28 is provided on the housing 36. The motor 28 includes a motor rotational axis A5. A motor rotational shaft 28A is provided on the housing 36 and is rotatable about an additional center axis C2. In an example, the additional center axis C2 is parallel to the input center axis C1 and differs from the input center axis C1. In an example, the additional center axis C2 extends through the inner cavity of the housing 36 and is parallel to the input center axis C1. In an example, the motor rotational axis A5 is substantially coaxial with the additional center axis C2.

The motor speed reducer 32 is configured to output motor driving force received from the motor 28 to the transmission path of human driving force. In an example, the motor speed reducer 32 includes at least one of a gear, a pulley, and an endless annular member. In the present embodiment, the motor speed reducer 32 includes a gear. In an example, the motor speed reducer 32 includes a motor speed-reducing mechanism 32X including spur gears each having a different pitch diameter. The spur gears of the motor speed-reducing mechanism 32X connect the motor rotational shaft 28A and the net force unit 52. In a case where the motor speed reducer 32 includes a gear, the motor speed reducer 32 can include a planetary gear mechanism. In a case where the motor speed reducer 32 includes a pulley, the motor speed reducer 32 can include a belt-type speed-reducing mechanism. In a case where the motor speed reducer 32 includes an endless annular member, the motor speed reducer 32 can include a chain-type speed-reducing mechanism.

In an example, the motor speed reducer 32 includes a motor speed reducer rotation input unit 32A and a motor speed reducer rotation output unit 32B. In an example, the motor reduction ratio of the motor speed reducer 32 is the ratio of rotational speed of the motor speed reducer rotation output unit 32B to rotational speed of the motor speed reducer rotation input unit 32A. In an example, the motor reduction ratio of the motor speed reducer 32 is 0.125 or greater and less than 1. In an example, the motor reduction ratio of the motor speed reducer 32 is 0.15 or greater and less than 0.7. In an example, the motor reduction ratio of the motor speed reducer 32 is 0.17 or greater and less than 0.5. In an example, the motor reduction ratio of the motor speed reducer 32 is 0.2 or greater and less than 0.3. In an example, the motor reduction ratio of the motor speed reducer 32 is 0.25.

The net force unit 52 is provided in the transmission path of human driving force between the rotation input unit 22 and the rotation output unit 26. The net force unit 52 is configured to receive motor driving force from the motor 28 and human driving force. In an example, the net force unit 52 is configured to add motor driving force from the motor 28 and human driving force and outputs the net force to the speed reducer 34. In an example, the net force unit 52 is configured to receive human driving force from the transmission device rotation output unit 30B and output the human driving force to the speed reducer 34. In an example, the net force unit 52 is configured to receive motor driving force from the motor speed reducer rotation output unit 32B and output the motor driving force to the speed reducer 34.

In an example, the drive unit 50 includes a second one-way clutch 52A. In an example, the second one-way clutch 52A is provided in the transmission path of motor driving force between the motor 28 and the net force unit 52. In an example, the second one-way clutch 52A is configured to transmit rotational force of the motor 28 to the net force unit 52 and restrict transmission of rotational force of the net force unit 52 to the motor 28. In an example, the second one-way clutch 52A includes at least one of a roller clutch and a pawl-type clutch.

The speed reducer 34 is configured to receive motor driving force from the motor 28 and human driving force. The speed reducer 34 receives the motor driving force and the human driving force via the net force unit 52. The speed reducer 34 receives the motor driving force from the motor 28 via the motor speed reducer 32.

In an example, the speed reducer 34 includes a first speed reducer center axis A7, a speed reducer rotation input unit 34A, a second speed reducer center axis A8, and a speed reducer rotation output unit 34B. In an example, the second speed reducer center axis A8 differs from the first speed reducer center axis A7. In an example, the speed reducer rotation input unit 34A is rotatable about the first speed reducer center axis A7. In an example, the speed reducer rotation output unit 34B is rotatable about the second speed reducer center axis A8. The first speed reducer center axis A7 is substantially coaxial with the input center axis C1. The second speed reducer center axis A8 is substantially coaxial with a rotational center axis C3 of the hub shell 38. In an example, human driving force is input to the speed reducer rotation input unit 34A. In an example, the human driving force is output from the speed reducer rotation output unit 34B. The speed reducer 34 is configured to reduce the speed of rotation that is input to the speed reducer rotation input unit 34A in accordance with the reduction ratio and output the rotation from the speed reducer rotation output unit 34B.

In an example, the reduction ratio of the speed reducer 34 is a ratio of rotational speed of the speed reducer rotation output unit 34B to rotational speed of the speed reducer rotation input unit 34A. In a first example of the reduction ratio, the reduction ratio of the speed reducer 34 is greater than 0 and 0.8 or less. The reduction ratio of the speed reducer 34 is, for example, 0.1 or greater and 0.5 or less. The reduction ratio of the speed reducer 34 is, for example, 0.15 or greater and 0.3 or less. The reduction ratio of the speed reducer 34 is, for example, 0.15.

In a second example of the reduction ratio, the reduction ratio of the speed reducer 34 is greater than 0 and less than 1. The reduction ratio of the speed reducer 34 is, for example, 0.125 or greater and less than 0.7. The reduction ratio of the speed reducer 34 is, for example, 0.17 or greater and less than 0.5. The reduction ratio of the speed reducer 34 is, for example, 0.2 or greater and less than 0.3.

In a third example of the reduction ratio, the reduction ratio of the speed reducer 34 is 0.05 or greater and 0.5 or less. The reduction ratio of the speed reducer 34 is, for example, 0.1 or greater and 0.2 or less.

In a fourth example of the reduction ratio, the reduction ratio of the speed reducer 34 is greater than 0 and 0.65 or less. The reduction ratio of the speed reducer 34 is, for example, 0.05 or greater and 0.5 or less. The reduction ratio of the speed reducer 34 is, for example, 0.1 or greater and 0.3 or less.

In an example, the drive rotation input unit 40 is configured to receive human driving force via the speed increaser 24. In an example, the drive rotation input unit 40 receives human driving force via the transmission device 30. In an example, the drive rotation input unit 40 receives motor driving force from the motor 28. In an example, the drive rotation input unit 40 is configured to be rotatable about a first drive rotational center axis A9. The first drive rotational center axis A9 is substantially coaxial with the input center axis C1. In an example, the first drive rotational center axis A9 is substantially coaxial with the speed increaser rotational center axis A1. In an example, the first drive rotational center axis A9 is substantially coaxial with the transmission device rotational center axis A4. The first drive rotational center axis A9 is substantially coaxial with the first speed reducer center axis A7.

In an example, the drive rotation output unit 42 is configured to be rotatable about a second drive rotational center axis A10. In an example, the second drive rotational center axis A10 differs from the first drive rotational center axis A9. In an example, the second drive rotational center axis A10 is parallel to the first drive rotational center axis A9. In an example, the second drive rotational center axis A10 is substantially coaxial with the rotational center axis C3 of the axle 12 of the wheel 14 of the human-powered vehicle 10. The second drive rotational center axis A10 is substantially coaxial with the second speed reducer center axis A8.

The drive rotation input unit 40 has a single pitch circle configured to receive human driving force via the input rotation shaft 54, which is configured to receive human driving force. The drive rotation output unit 42 has a single pitch circle configured to output human driving force to the wheel 14 of the human-powered vehicle 10. The pitch circle of the drive rotation input unit 40 has an input pitch diameter X1. The pitch circle of the drive rotation output unit 42 has an output pitch diameter X2. The input pitch diameter X1 is smaller than the output pitch diameter X2. In an example, the reduction ratio of the speed reducer 34 is a ratio of the input pitch diameter X1 to the output pitch diameter X2. In an example, the drive rotation input unit 40, the drive rotation output unit 42, and the endless annular member 44 form the speed reducer 34. In an example, the drive rotation input unit 40 includes the speed reducer rotation input unit 34A. In an example, the drive rotation output unit 42 includes the speed reducer rotation output unit 34B.

In an example, the input pitch diameter X1 is 10 mm or greater and 103 mm or less. In an example, the input pitch diameter X1 is 15 mm or greater and 82 mm or less. In an example, the input pitch diameter X1 is 20 mm or greater and 62 mm or less. In an example, the input pitch diameter X1 is 25 mm or greater and 38 mm or less. In an example, the input pitch diameter X1 is 38 mm.

In an example, the pitch circle ratio of the input pitch diameter X1 of the drive rotation input unit 40 to the output pitch diameter X2 of the drive rotation output unit 42 is greater than 0 and 1 or less. The pitch circle ratio of the input pitch diameter X1 to the output pitch diameter X2 is, for example, 0.05 or greater and 0.8 or less. The pitch circle ratio of the input pitch diameter X1 to the output pitch diameter X2 is, for example, 0.1 or greater and 0.5 or less. The pitch circle ratio of the input pitch diameter X1 to the output pitch diameter X2 is, for example, 0.15 or greater and 0.2 or less. The pitch circle ratio of the input pitch diameter X1 to the output pitch diameter X2 is, for example, 0.2.

The rotation output unit 26 is connected to the wheel 14 and is configured to output human driving force, received from the speed reducer 34, to the wheel 14. The rotation output unit 26 is configured to receive human driving force via the speed increaser 24. The rotation output unit 26 is configured to receive human driving force and motor driving force from the speed reducer 34 via the drive rotation output unit 42. The human driving force and the motor driving force, which are received from the drive rotation output unit 42, rotate the hub shell 38 of the rotation output unit 26, thereby drive the human-powered vehicle 10.

In an example, at least one of the speed increaser 24, the transmission device 30, and the speed reducer 34 includes a metal material. In an example, at least one of the speed increaser 24, the transmission device 30, and the speed reducer 34 includes a component forming the transmission path of human driving force, and at least a portion of the component includes a metal material. In an example, the metal material includes at least one of steel, a stainless steel alloy, an aluminum alloy, a magnesium alloy, a titanium alloy, and iron and steel.

In an example, at least one of the speed increaser 24, the transmission device 30, and the speed reducer 34 includes a resin material. In an example, at least one of the speed increaser 24, the transmission device 30, and the speed reducer 34 includes a component forming the transmission path of human driving force, and at least a portion of the component includes a resin material. In an example, the resin material includes a thermoplastic member and a thermosetting member. The thermoplastic member includes at least one of polyethylene, polypropylene, polystyrene, AS resin, ABS resin, polyvinyl chloride, acrylic resin, PET resin, PVA resin, polyvinylidene chloride, polyvinylidene fluoride nylon 6, nylon 66, nylon 12, acetal resin, polycarbonate, PBT resin, polyphenylene sulfide, polyimide resin, polyetherimide, polyphenylene sulfide, polytetrafluoroethylene, polychlorotrifluoroethylene, polyamide-imide, acetyl cellulose, nitro cellulose, propionic acid cellulose, and ethyl cellulose. The thermosetting member includes at least one of a phenol resin, a urea resin, a melamine resin, an unsaturated polyester, a polyurethane, an allyl resin, a silicon resin, an epoxy resin, and a furan resin.

In an example, at least one of the speed increaser 24, the transmission device 30, and the speed reducer 34 can include a gear including tooth tips formed from a resin material, and the remaining portion of the gear can be formed from a metal material. In an example, at least one of the speed increaser 24, the transmission device 30, and the speed reducer 34 can include a gear formed from a resin material. In an example, at least one of the speed increaser 24, the transmission device 30, and the speed reducer 34 can include a gear formed from a metal material.

In the present embodiment, human driving force is sequentially transmitted through the rotation input unit 22, the speed increaser 24, the transmission device 30, the speed reducer 34, and the rotation output unit 26, and motor driving force is transmitted to a location between the transmission device 30 and the speed reducer 34. However, at least one of the layout and the structure of each of the speed increaser 24, the transmission device 30, the motor 28, the motor speed reducer 32, and the speed reducer 34 can be changed.

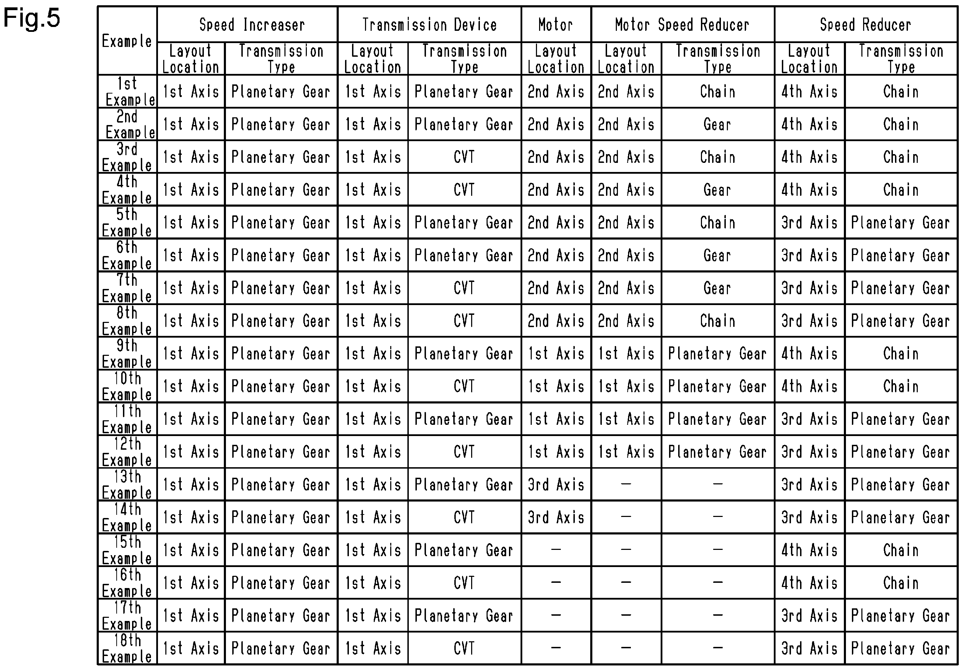

Tables shown in Figs. 5 to 8 show first to fiftieth examples of combinations of the speed increaser 24, the transmission device 30, the motor 28, the motor speed reducer 32, and the speed reducer 34. The drive system 20 shown in Figs. 1 to 4 corresponds to the first example.

In Figs. 5 to 8, the layout location indicates the location of the rotational center axis of each of the speed increaser 24, the transmission device 30, the motor 28, the motor speed reducer 32, and the speed reducer 34. In each example, the speed increaser 24, the transmission device 30, the motor 28, the motor speed reducer 32, and the speed reducer 34 are arranged so that each rotational center axis conforms to the axis indicated in the layout location. In the tables shown in Figs. 5 to 8, the layout location that is indicated by "-" indicates that the drive system 20 does not include the corresponding one of the speed increaser 24, the transmission device 30, the motor 28, the motor speed reducer 32, and the speed reducer 34 indicated by "-" in the layout location.

A first axis B1 is substantially coaxial with the input center axis C1. A second axis B2 is substantially coaxial with the additional center axis C2. A third axis B3 is substantially coaxial with the rotational center axis C3. A fourth axis B4 corresponds to, for example, a case where the rotational center axis of the rotation input unit 22 differs from the rotational center axis of the rotation output unit 26 in each of the speed increaser 24 and the speed reducer 34. In a case where the layout location of the speed reducer 34 is the fourth axis B4, the speed reducer 34 includes the drive rotation input unit 40 and the drive rotation output unit 42. In a case where the layout location of the speed increaser 24 is the fourth axis B4, the speed increaser 24 includes the drive rotation input unit 40 and the drive rotation output unit 42. In a case where the speed increaser 24 includes the drive rotation input unit 40 and the drive rotation output unit 42, the number of sprocket teeth of the drive rotation input unit 40 is greater than the number of sprocket teeth of the drive rotation output unit 42.

In a case where the layout location of each of the speed increaser 24, the transmission device 30, the motor 28, the motor speed reducer 32, and the speed reducer 34 is the first axis B 1 or the second axis B2, each of the speed increaser 24, the transmission device 30, the motor 28, the motor speed reducer 32, and the speed reducer 34 is provided in the vicinity of the crank axle 16. In a case where the layout location of each of the speed increaser 24, the transmission device 30, the motor 28, the motor speed reducer 32, and the speed reducer 34 is the third axis B3, each of the speed increaser 24, the transmission device 30, the motor 28, the motor speed reducer 32, and the speed reducer 34 is provided on the rear hub 46.

In the tables shown in Figs. 5 to 8, the transmission type includes a planetary gear type, a chain type, a CVT type, an external transmission type, and a gear type. In a case where the transmission type of each of the speed increaser 24, the transmission device 30, the motor 28, the motor speed reducer 32, and the speed reducer 34 is a planetary gear, the speed increaser 24, the transmission device 30, the motor 28, the motor speed reducer 32, and the speed reducer 34 each include a planetary gear mechanism. In a case where the transmission type of each of the speed increaser 24, the transmission device 30, the motor 28, the motor speed reducer 32, and the speed reducer 34 is a chain, the speed increaser 24, the transmission device 30, the motor 28, the motor speed reducer 32, and the speed reducer 34 each include two sprockets and a chain. In a case where the transmission type of each of the speed increaser 24, the transmission device 30, the motor 28, the motor speed reducer 32, and the speed reducer 34 is a chain, the speed increaser 24, the transmission device 30, the motor 28, the motor speed reducer 32, and the speed reducer 34 can each include two pulleys and a belt. In a case where the transmission type of the transmission device 30 is CVT, the transmission device 30 includes a CVT. In a case where the transmission type of the transmission device 30 is an external transmission, the transmission device 30 includes an external transmission device. In a case where the transmission type of the motor speed reducer 32 is a gear, the motor speed reducer 32 includes gears. In the tables shown in Figs. 5 to 8, in each example in which the transmission type of the transmission device 30 is described as external transmission and CVT, the transmission device 30 includes at least one of an external transmission device and a CVT. In the tables shown in Figs. 5 to 8, in each example in which the transmission type of the transmission device 30 is described as external transmission and CVT, the transmission device 30 can include a planetary gear mechanism in addition to or instead of at least one of an external transmission device and a CVT. In the tables shown in Figs. 5 to 8, in each example in which the transmission type of the speed increaser 24 is described as planetary gear and chain, the speed increaser 24 includes at least one of a planetary gear and a chain. In the tables shown in Figs. 5 to 8, in each example in which the transmission type of the speed increaser 24 is described as planetary gear and chain, the speed increaser 24 can include gears in addition to or instead of at least one of a planetary gear and a chain.

### Second Embodiment

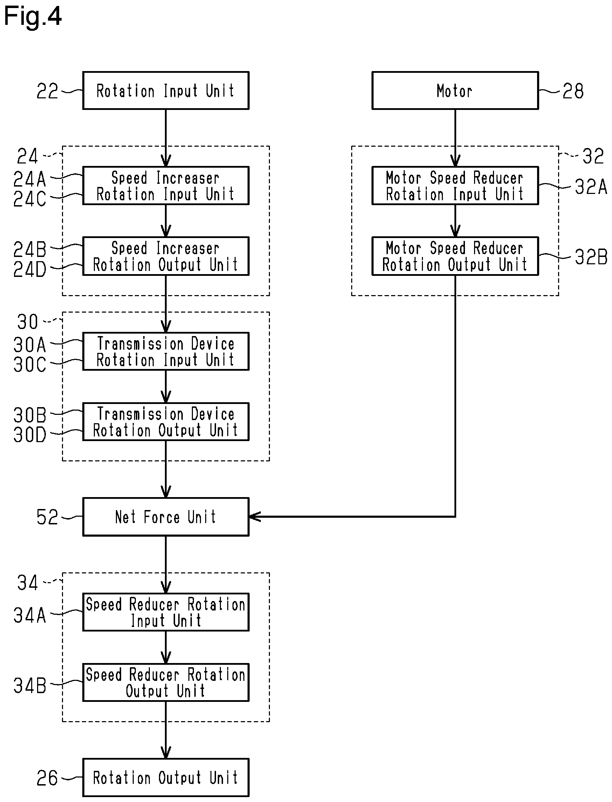

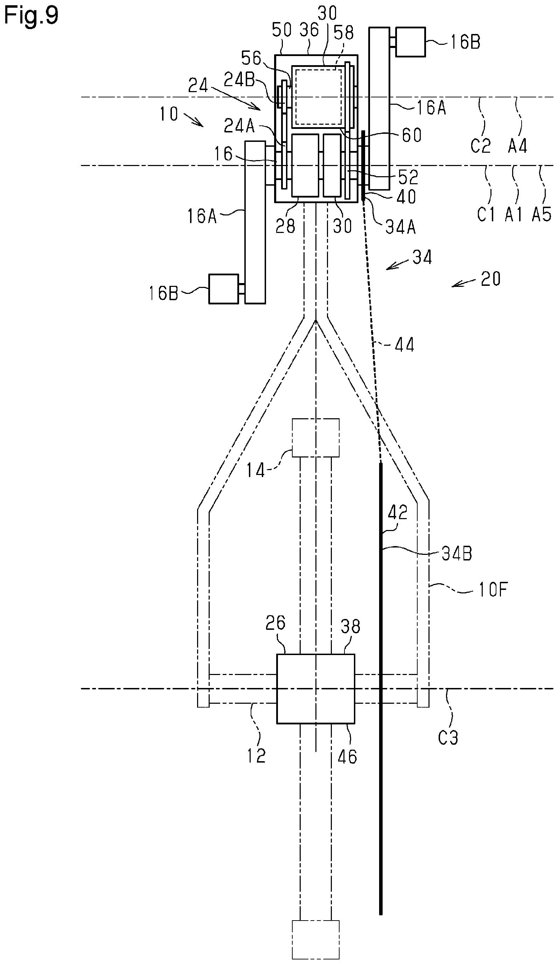

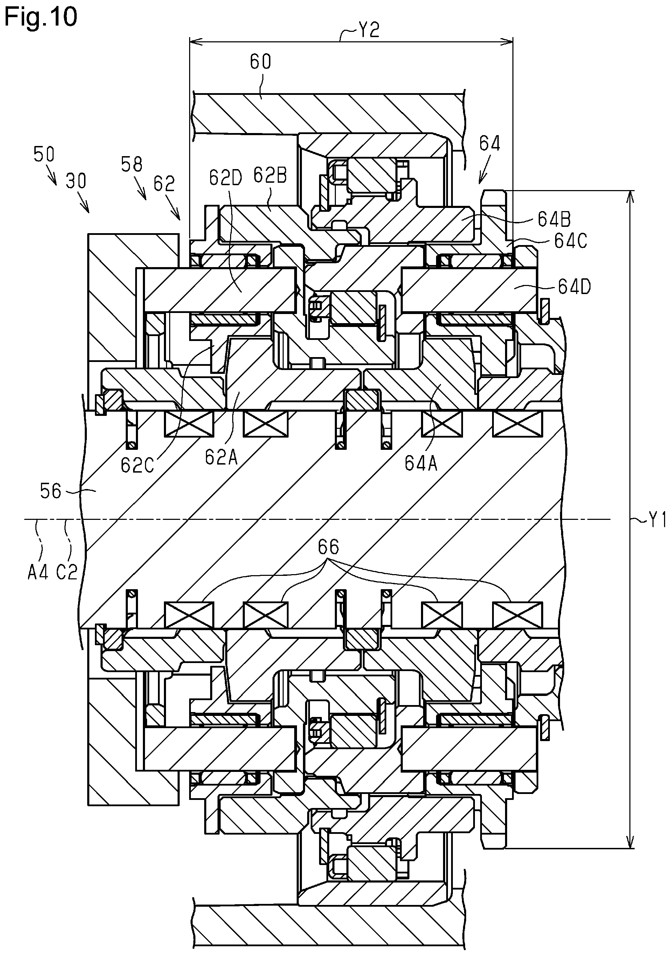

A second embodiment of the drive system 20 and the drive unit 50 will now be described with reference to Figs. 4, 9, and 10. The drive system 20 and the drive unit 50 of the second embodiment are the same as the drive system 20 and the drive unit 50 of the first embodiment except for the structure of the drive unit 50. In the second embodiment, same reference characters are given to those components that are the same as the corresponding components of the first embodiment. Such components will not be described in detail.

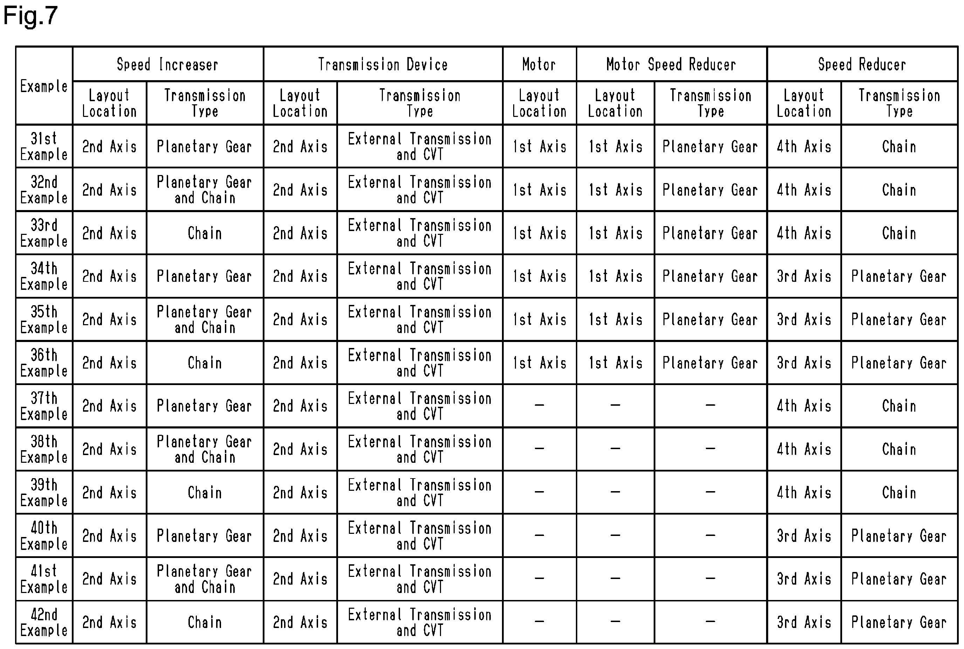

The drive system 20 of the present embodiment corresponds to, for example, the thirty-first to thirty-sixth examples shown in Fig. 7. In the present embodiment, the drive unit 50 includes an additional shaft 56. The center axis of the additional shaft 56 is substantially coaxial with the additional center axis C2. In the present embodiment, the speed increaser 24 includes gears. In the present embodiment, the speed increaser rotation input unit 24A is configured to be rotatable about the input center axis C1. In the present embodiment, the speed increaser rotation output unit 24B is configured to be rotatable about the additional center axis C2. In the present embodiment, the transmission device 30 is provided on the additional shaft 56 so that the transmission device rotational center axis A4 is substantially coaxial with the additional center axis C2. In an example, a speed reducer and a speed increaser are not provided between the transmission device 30 and the net force unit 52. In the present embodiment, the motor 28 is provided on the housing 36 so that the motor rotational axis A5 is substantially coaxial with the input center axis C1. In the present embodiment, the motor speed reducer 32 is provided on the housing 36 so that a motor speed reducer center axis A6 is substantially coaxial with the input center axis C1.

In the present embodiment, the transmission device 30 includes, for example, a planetary gear mechanism 58. In an example, the transmission device 30 includes gears. In an example, the transmission device 30 includes the planetary gear mechanism 58 including gears. In an example, the gears at least partially include a resin member. The resin member includes a resin material. In an example, one of the gears includes tooth tips including a resin material. In an example, the resin member includes at least one of a thermoplastic member and a thermosetting member. One of the gears includes tooth tips including the thermoplastic member. One of the gears can include tooth tips including the thermosetting member.

The planetary gear mechanism 58 is configured to output rotational force to a transmission device output unit 60 of the transmission device 30. In an example, the transmission device output unit 60 is tubular. In an example, at least a portion of the planetary gear mechanism 58 is provided in the inner cavity of the transmission device output unit 60. The transmission device output unit 60 is connected to the net force unit 52 so as to output rotational force to the net force unit 52. In an example, the transmission device 30 includes a first planetary assembly 62 and a second planetary assembly 64. In an example, the planetary gear mechanism 58 includes the first planetary assembly 62 and the second planetary assembly 64 The second planetary assembly 64 is connected to the first planetary assembly 62. In an example, the second planetary assembly 64 is located at a position separated from the first planetary assembly 62 in a direction parallel to the transmission device rotational center axis A4. In an example, the first planetary assembly 62 and the second planetary assembly 64 share a common transmission device rotational center axis. The common transmission device rotational center axis of the first planetary assembly 62 and the second planetary assembly 64 is substantially coaxial with the transmission device rotational center axis A4.

The first planetary assembly 62 includes a first sun gear 62A, a first ring gear 62B, first planetary gears 62C, and a first carrier 62D. The first sun gear 62A is disposed around the additional shaft 56. The first ring gear 62B is disposed around the first sun gear 62A. The first planetary gears 62C are disposed between the first sun gear 62A and the first ring gear 62B to engage with the first sun gear 62A and the first ring gear 62B. The first carrier 62D is connected to the first planetary gear 62C.

The second planetary assembly 64 includes a second sun gear 64A, a second ring gear 64B, second planetary gears 64C, and a second carrier 64D. The second sun gear 64A is disposed around the additional shaft 56. The second ring gear 64B is disposed around the second sun gear 64A. The second planetary gears 64C are arranged between the second sun gear 64A and the second ring gear 64B to engage with the second sun gear 64A and the second ring gear 64B. The second carrier 64D is connected to the second planetary gears 64C.

In an example, the transmission device rotation input unit 30A is connected to the first carrier 62D of the first planetary assembly 62. In an example, the transmission device rotation output unit 30B is connected to the transmission device output unit 60. The transmission device output unit 60 rotates integrally with the second ring gear 64B of the second planetary assembly 64. The transmission device 30 includes at least four transmission stages. In an example, the transmission device 30 includes four transmission stages. In an example, the transmission device 30 includes a transmission switch 66. In an example, the transmission switch 66 includes four clutches. The transmission switch 66 is configured to switch the four clutches to switch the transmission stage of the transmission device 30.

The transmission device 30 has a maximum dimension Y1 of, for example, 80 mm or less in a direction orthogonal to the transmission device rotational center axis A4. The transmission device 30 has a maximum dimension Y2 of, for example, 30 mm or less in a direction parallel to the transmission device rotational center axis A4. The maximum dimension Y1 is a dimension between a farthest part of the second planetary gears 64C from the transmission device rotational center axis A4 and another farthest part of the second planetary gears 64C from the transmission device rotational center axis A4 located at the opposite side in the circumferential direction of the transmission device rotational center axis A4. The maximum dimension Y2 is a dimension between an end of the first planetary gear 62C opposite to the second planetary assembly 64 and an end of the second planetary gears 64C opposite to the first planetary assembly 62 in a direction parallel to the transmission device rotational center axis A4. The maximum dimension Y2 can be a dimension between an end of the first carrier 62D opposite to the second planetary assembly 64 and an end of the second carrier 64D opposite to the first planetary assembly 62 in a direction parallel to the transmission device rotational center axis A4.

The maximum dimension Y1 of the transmission device 30 is, for example, 70 mm or less in a direction orthogonal to the transmission device rotational center axis A4. The maximum dimension Y1 of the transmission device 30 is, for example, 60 mm or less in a direction orthogonal to the transmission device rotational center axis A4. The maximum dimension Y2 is, for example, 20 mm or less in a direction parallel to the transmission device rotational center axis A4. The maximum dimension Y2 is, for example, 10 mm or less in a direction parallel to the transmission device rotational center axis A4. The maximum dimension Y2 is, for example, 6 mm or less in a direction parallel to the transmission device rotational center axis A4.

### Third Embodiment

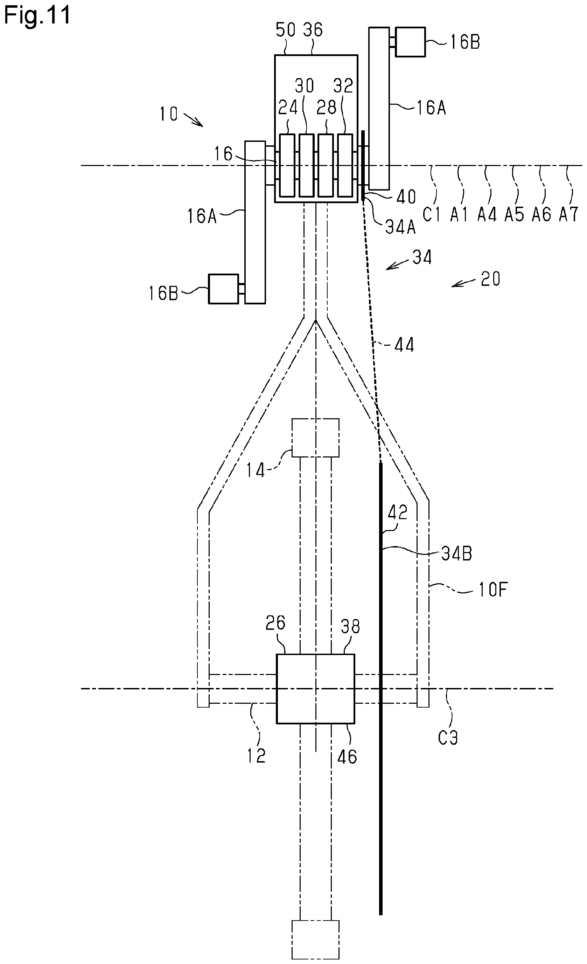

A third embodiment of the drive system 20 and the drive unit 50 will now be described with reference to Figs. 4 and 11. The drive system 20 and the drive unit 50 of the third embodiment are the same as the drive system 20 and the drive unit 50 of the first embodiment except for the structure of the drive unit 50. In the third embodiment, same reference characters are given to those components that are the same as the corresponding components of the first embodiment. Such components will not be described in detail.

The drive system 20 of the present embodiment corresponds to, for example, the ninth to eleventh examples shown in Fig. 5. In the present embodiment, the drive unit 50 includes the housing 36, the speed increaser 24, the transmission device 30, and the motor 28. In the present embodiment, the speed increaser 24, the transmission device 30, and the motor 28 are provided on the housing 36. The speed increaser 24, the transmission device 30, and the motor 28 are disposed around the crank axle 16. In the present embodiment, the speed increaser 24 and the transmission device 30 each include at least one planetary gear mechanism disposed around the crank axle 16.

In the present embodiment, the drive unit 50 includes the motor speed reducer 32. In the present embodiment, the motor speed reducer 32 is provided on the housing 36. The motor speed reducer 32 is disposed around the crank axle 16. In the present embodiment, the motor speed reducer 32 includes at least one planetary gear mechanism disposed around the crank axle 16. In an example, the motor speed reducer 32 includes the motor speed reducer center axis A6, the motor speed reducer rotation input unit 32A, and the motor speed reducer rotation output unit 32B. In the present embodiment, the motor speed reducer rotation input unit 32A is, for example, rotatable about the motor speed reducer center axis A6. In the present embodiment, the motor speed reducer rotation output unit 32B is, for example, rotatable about the motor speed reducer center axis A6. The motor speed reducer center axis A6 is substantially coaxial with the input center axis C1.

In the present embodiment, the speed increaser rotational center axis A1, the transmission device rotational center axis A4, and the motor rotational axis A5 are substantially coaxial with each other. In an example, the speed increaser rotational center axis A1, the transmission device rotational center axis A4, and the motor rotational axis A5 are substantially coaxial with the input center axis C1. In an example, at least one of the speed increaser rotational center axis A1, the transmission device rotational center axis A4, and the motor rotational axis A5 is substantially coaxial with the motor speed reducer center axis A6. In the present embodiment, all of the speed increaser rotational center axis A1, the transmission device rotational center axis A4, and the motor rotational axis A5 are substantially coaxial with the motor speed reducer center axis A6.

In an example, the speed increaser rotational center axis A1, the transmission device rotational center axis A4, and the motor rotational axis A5 differ from one of the first speed reducer center axis A7 and the second speed reducer center axis A8. In the present embodiment, the speed increaser rotational center axis A1, the transmission device rotational center axis A4, and the motor rotational axis A5 differ from the second speed reducer center axis A8. In addition, the speed increaser rotational center axis A1, the transmission device rotational center axis A4, and the motor rotational axis A5 are substantially coaxial with the first speed reducer center axis A7.

### Fourth Embodiment

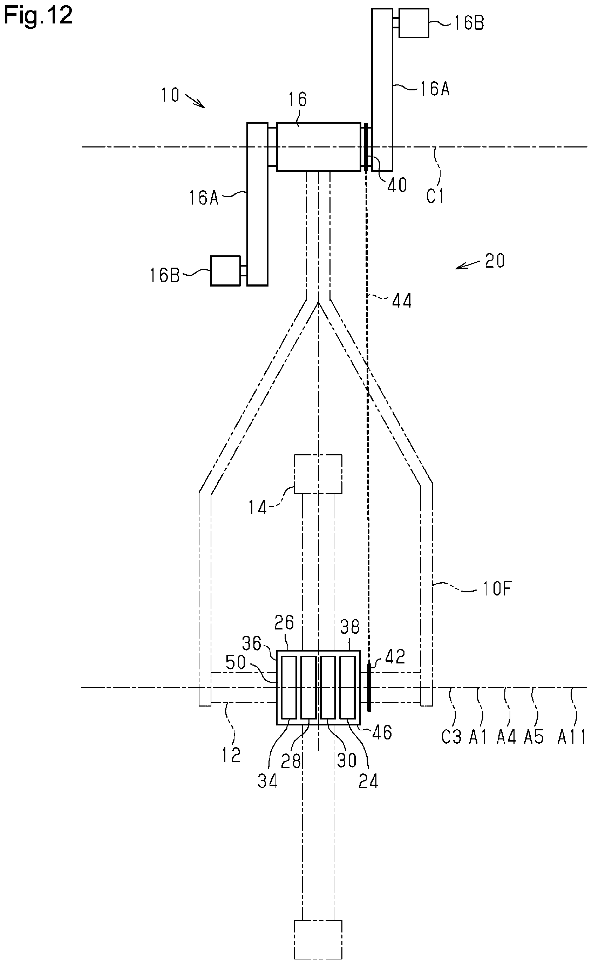

A fourth embodiment of the drive system 20 and the drive unit 50 will now be described with reference to Figs. 4 and 12. The drive system 20 and the drive unit 50 of the fourth embodiment are the same as the drive system 20 and the drive unit 50 of the first embodiment except for the structure of the drive unit 50. In the fourth embodiment, same reference characters are given to those components that are the same as the corresponding components of the first embodiment. Such components will not be described in detail.

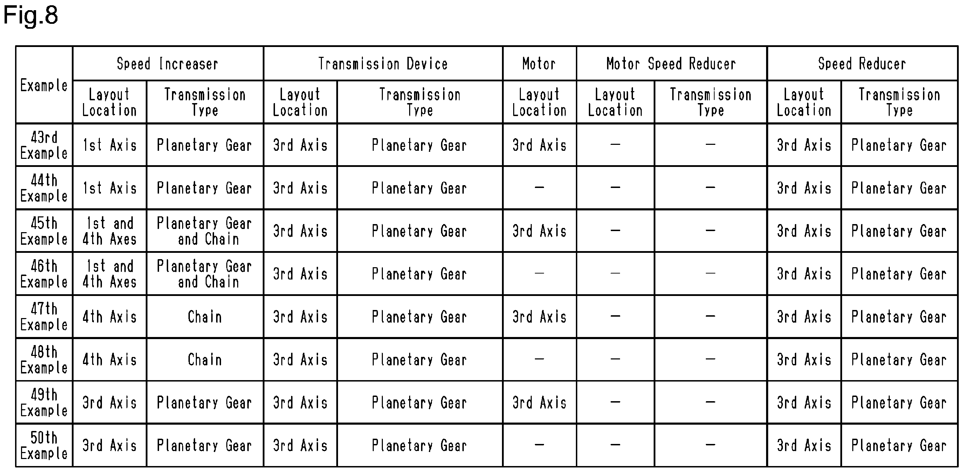

The drive system 20 of the present embodiment corresponds to, for example, the forty-ninth example shown in Fig. 8. In the present embodiment, the drive system 20 and the drive unit 50 do not include the motor speed reducer 32. In the present embodiment, the drive unit 50 is at least partially provided on the axle 12 of the wheel 14 of the human-powered vehicle 10. In the present embodiment, the drive unit 50 is provided on the axle 12 of the wheel 14 of the human-powered vehicle 10. In an example, the drive unit 50 includes the housing 36, the speed increaser 24, the transmission device 30, the motor 28, and the speed reducer 34. In an example, the housing 36 includes the hub shell 38. In the present embodiment, the speed increaser 24, the transmission device 30, and the motor 28 are provided on the housing 36. The speed reducer 34 is provided on the housing 36. The speed increaser 24, the transmission device 30, the motor 28, and the speed reducer 34 are provided on the axle 12 of the wheel 14. In the present embodiment, the speed increaser 24, the transmission device 30, the motor 28, and the speed reducer 34 each include at least one planetary gear mechanism disposed around the axle 12. In an example, the speed increaser rotational center axis A1, the transmission device rotational center axis A4, and the motor rotational axis A5 are substantially coaxial with the rotational center axis C3 of the axle 12.

In the present embodiment, the input pitch diameter X1 of the drive rotation input unit 40 is equal to the output pitch diameter X2 of the drive rotation output unit 42. In the present embodiment, the drive rotation input unit 40, the drive rotation output unit 42, and the endless annular member 44 transmit rotational force of the crank axle 16 to the axle 12 while maintaining the rotational speed.

In the present embodiment, the speed reducer 34 includes a speed reducer rotational center axis A11. In an example, the speed reducer rotation input unit 34A is rotatable about the speed reducer rotational center axis A11. In an example, the speed reducer rotation output unit 34B is rotatable about the speed reducer rotational center axis A11. In an example, the speed increaser rotational center axis A1 and the speed reducer rotational center axis A11 are substantial coaxial. In the present embodiment, the speed increaser rotational center axis A1, the transmission device rotational center axis A4, and the motor rotational axis A5 are substantially coaxial with the speed reducer rotational center axis A11.

Three or more of the speed increaser rotational center axis A1, the transmission device rotational center axis A4, the speed reducer rotational center axis A11, and the motor rotational axis A5 are substantially coaxial with each other. In the present embodiment, all of the speed increaser rotational center axis A1, the transmission device rotational center axis A4, the speed reducer rotational center axis A11, and the motor rotational axis A5 are substantially coaxial. In an example, three or more of the speed increaser rotational center axis A1, the transmission device rotational center axis A4, the speed reducer rotational center axis A11, and the motor rotational axis A5 that are substantially coaxial with each other are substantially coaxial with the rotational center axis C3 of the axle 12. In the present embodiment, all of the speed increaser rotational center axis A1, the transmission device rotational center axis A4, the speed reducer rotational center axis A11, and the motor rotational axis A5 are substantially coaxial with the rotational center axis C3 of the axle 12. In an example, the speed increaser rotational center axis A1, the transmission device rotational center axis A4, the speed reducer rotational center axis A11, and the motor rotational axis A5 are substantially coaxial with each other.

### Fifth Embodiment

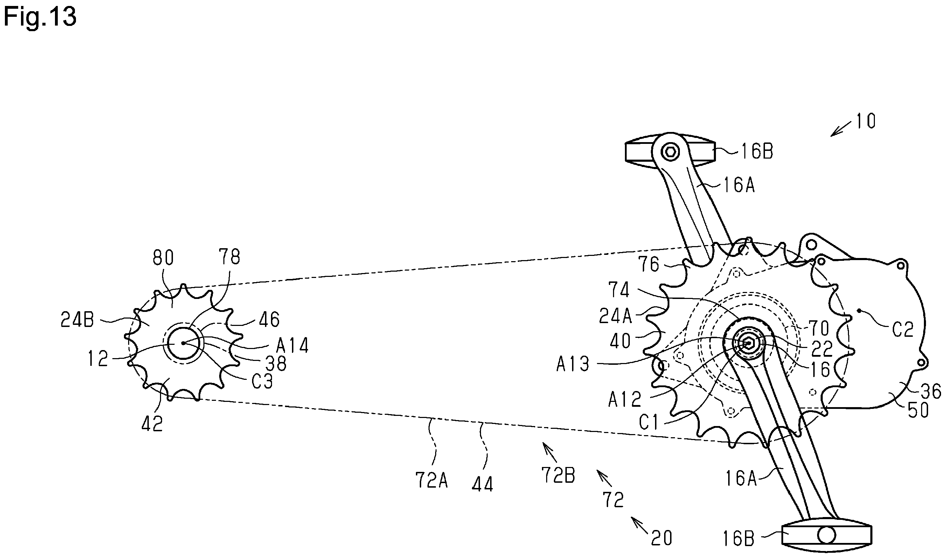

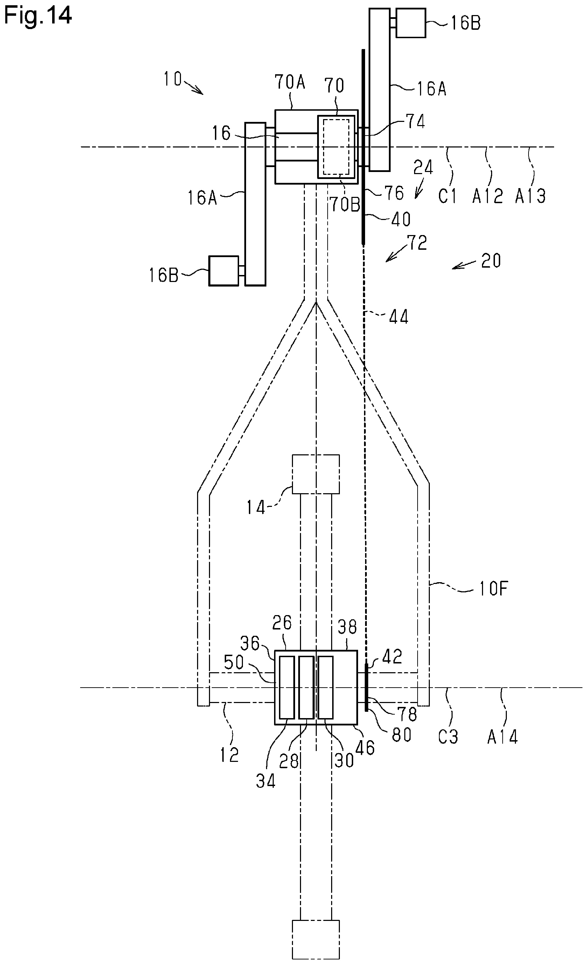

A fifth embodiment of the drive system 20 and the drive unit 50 will now be described with reference to Figs. 4, 13, and 14. The drive system 20 and the drive unit 50 of the fifth embodiment are the same as the drive system 20 and the drive unit 50 of the fourth embodiment except for the structures of the drive unit 50 and the speed increaser 24. In the fifth embodiment, same reference characters are given to those components that are the same as the corresponding components of the first and fourth embodiments. Such components will not be described in detail.

The drive system 20 of the present embodiment corresponds to, for example, the forty-fifth example shown in Fig. 8. In the present embodiment, the drive system 20 includes a first speed increaser 70 and a second speed increaser 72. In the present embodiment, the speed increaser 24 includes the first speed increaser 70 and the second speed increaser 72. In the present embodiment, the drive system 20 includes an additional housing 70A. The additional housing 70A is mounted on the frame 10F of the human-powered vehicle 10. The first speed increaser 70 is provided on the additional housing 70A.

The first speed increaser 70 is configured to receive human driving force via the input rotation shaft 54. The first speed increaser 70 is provided on the additional housing 70A and is rotatable about the input center axis C1. The first speed increaser 70 includes a speed-increasing mechanism 70B of a planetary gear type disposed around the crank axle 16. Human driving force is input to the first speed increaser 70 via the rotation input unit 22. The first speed increaser 70 outputs the human driving force to the second speed increaser 72.

The second speed increaser 72 is at least partially provided on the additional housing 70A. The second speed increaser 72 is configured to receive human driving force via the first speed increaser 70. The second speed increaser 72 includes the speed increaser rotation input unit 24A, the speed increaser rotation output unit 24B, and an endless looped member 72A. In the present embodiment, the speed increaser rotation input unit 24A is configured to receive human driving force via the first speed increaser 70. In the present embodiment, the speed increaser rotation output unit 24B is configured to output human driving force to the wheel 14 of the human-powered vehicle 10. The endless looped member 72A couples the speed increaser rotation input unit 24A and the speed increaser rotation output unit 24B.

In an example, the speed increaser rotation input unit 24A of the present embodiment includes the drive rotation input unit 40, the speed increaser rotation output unit 24B of the present embodiment includes the drive rotation output unit 42, and the endless looped member 72A includes the endless annular member 44. In the present embodiment, the input pitch diameter X1 of the drive rotation input unit 40 is greater than the output pitch diameter X2 of the drive rotation output unit 42. In an example, the drive rotation input unit 40, the drive rotation output unit 42, and the endless annular member 44 form the second speed increaser 72.

The second speed increaser 72 includes at least one speed-increasing mechanism 72B of a chain type or a belt type. In an example, the second speed increaser 72 includes a speed-increasing mechanism 72B of a chain type. In an example, the speed increaser rotation input unit 24A includes a first sprocket. In an example, the speed increaser rotation output unit 24B includes a second sprocket. In an example, the endless annular member 44 includes a chain.

The speed increaser rotation input unit 24A includes the rotational shaft center axis A12. The rotational shaft center axis A12 is substantially coaxial with the input center axis C1. At least a portion of the first speed increaser 70 is provided at a radially inner side of the speed increaser rotation input unit 24A with respect to the rotational shaft center axis A12. As viewed in a direction parallel to the rotational shaft center axis A12, the first speed increaser 70 is provided at the radially inner side of the speed increaser rotation input unit 24A.

The speed increaser rotation input unit 24A is provided to be rotatable about a first speed increaser rotational center axis A13. The speed increaser rotation output unit 24B is provided to be rotatable about a second speed increaser rotational center axis A14. In an example, the speed increaser rotation input unit 24A includes an input attachment 74. In an example, the input attachment 74 is configured to attach an input rotational body 76 rotatable about the first speed increaser rotational center axis A13. In an example, the input rotational body 76 includes the drive rotation input unit 40. In an example, the input rotational body 76 includes the speed increaser rotation input unit 24A. In an example, the speed increaser rotation output unit 24B includes an output attachment 78. In an example, the output attachment 78 is configured to attach an output rotational body 80 rotatable about the second speed increaser rotational center axis A14. In an example, the output rotational body 80 includes the drive rotation output unit 42. In an example, the output rotational body 80 includes the speed increaser rotation output unit 24B. In an example, the output attachment 78 is similar in shape to the input attachment 74. Since the output attachment 78 is similar in shape to the input attachment 74, the input attachment 74 is configured to attach the output rotational body 80 to the input attachment 74 so that the output rotational body 80 is rotatable about the first speed increaser rotational center axis A13. Since the input attachment 74 is similar in shape to the output attachment 78, the output attachment 78 is configured to attach the input rotational body 76 to the output attachment 78 so that the input rotational body 76 is rotatable about the second speed increaser rotational center axis A14.

In an example, the speed-increasing ratio of the speed increaser 24 corresponds to the speed-increasing ratio of the first speed increaser 70 and the second speed increaser 72. In an example, the speed-increasing ratio of the first speed increaser 70 and the second speed increaser 72 is a value obtained by multiplying the speed-increasing ratio of the first speed increaser 70 and the speed-increasing ratio of the second speed increaser 72. In an example, the speed-increasing ratio of the first speed increaser 70 and the second speed increaser 72 is 3 or greater and 20 or less. In an example, the speed-increasing ratio of the first speed increaser 70 and the second speed increaser 72 is 5 or greater and 18 or less. In an example, the speed-increasing ratio of the first speed increaser 70 and the second speed increaser 72 is 7 or greater and 16 or less. In an example, the speed-increasing ratio of the first speed increaser 70 and the second speed increaser 72 is 9 or greater and 14 or less.

### Modified Examples

The description related to the above embodiments exemplifies, without any intention to limit, applicable forms of a drive system for a human-powered vehicle and a drive unit for a human-powered vehicle according to the present disclosure. The drive system for a human-powered vehicle and the drive unit for a human-powered vehicle according to the present disclosure can be applied to, for example, modified examples of the embodiments that are described below and combinations of at least two of the modified examples that do not contradict each other. In the following modified examples, same reference characters are given to those components that are the same as the corresponding components of the above embodiments. Such components will not be described in detail.

At least one of the minimum transmission ratio and the maximum transmission ratio of the transmission device 30 can be changed. In an example, the minimum transmission ratio can be greater than 1. In an example, the maximum transmission ratio of the transmission device 30 can be 1 or less. In an example, the transmission ratio of the transmission device 30 can be configured to include 1. In an example, in a case where the minimum transmission ratio is 1, the maximum transmission ratio can be 2.6.

As long as the endless annular member 44 couples the drive rotation input unit 40 and the drive rotation output unit 42, the drive rotation input unit 40 can include a pulley, the drive rotation output unit 42 can include a pulley, and the endless annular member 44 can include a belt.

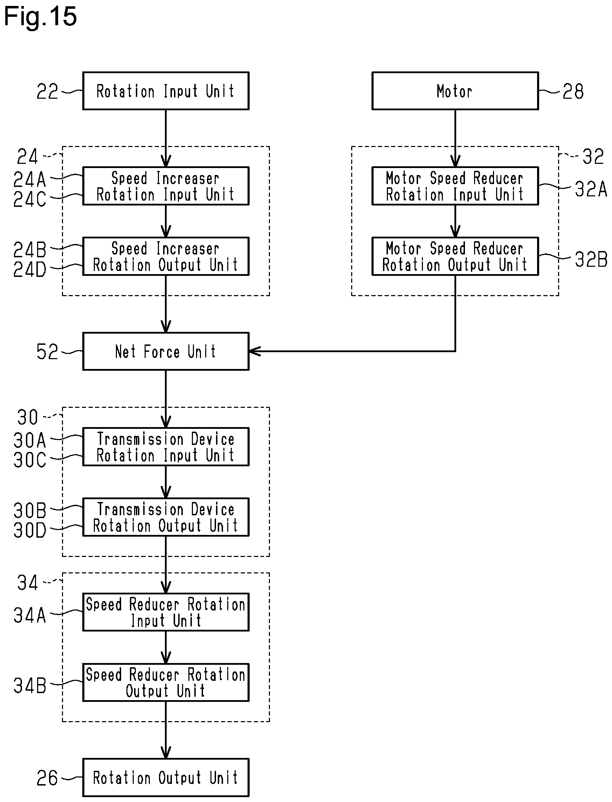

The net force unit 52 can be provided in the transmission path of human driving force between the speed increaser 24 and the transmission device 30. In an example, as shown in Fig. 15, the net force unit 52 can be configured to add motor driving force of the motor 28 and human driving force and output the net force to the transmission device 30. The net force unit 52 is configured to receive human driving force from the speed increaser rotation output unit 24B and output the human driving force to the transmission device rotation input unit 30A. The net force unit 52 is configured to receive motor driving force from the motor speed reducer 32 and output the motor driving force to the transmission device rotation input unit 30A. In this modified example, the motor speed reducer 32, the net force unit 52, the transmission device 30, the speed reducer 34, and the rotation output unit 26 form a portion of the transmission path of motor driving force. In this modified example, the motor driving force of the motor 28 is sequentially transmitted through the motor speed reducer 32, the net force unit 52, and the speed reducer 34 and then is output to the wheel 14.

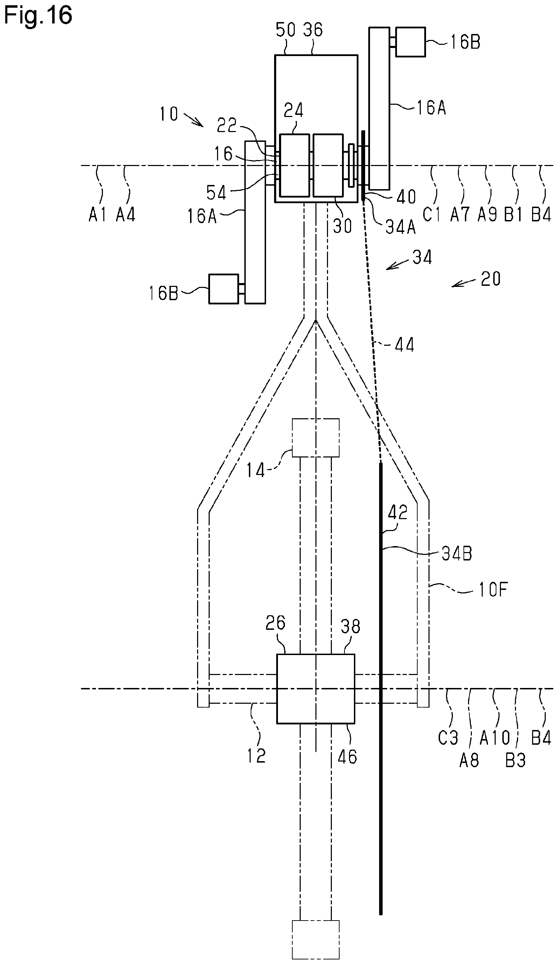

In the first embodiment, the drive unit 50 does not necessarily have to include the motor 28 and the motor speed reducer 32. Fig. 16 shows an example of the net force unit 52 that is configured to receive only human driving force. In this modified example, the net force unit 52 can be omitted.

In the first embodiment, the rotation input unit 22, the speed increaser 24, the rotation output unit 26, and the motor 28 can be provided on the housing 36. In a case where the rotation input unit 22, the speed increaser 24, the rotation output unit 26, and the motor 28 are provided on the housing 36, the rotation output unit 26 can include the drive rotation input unit 40.

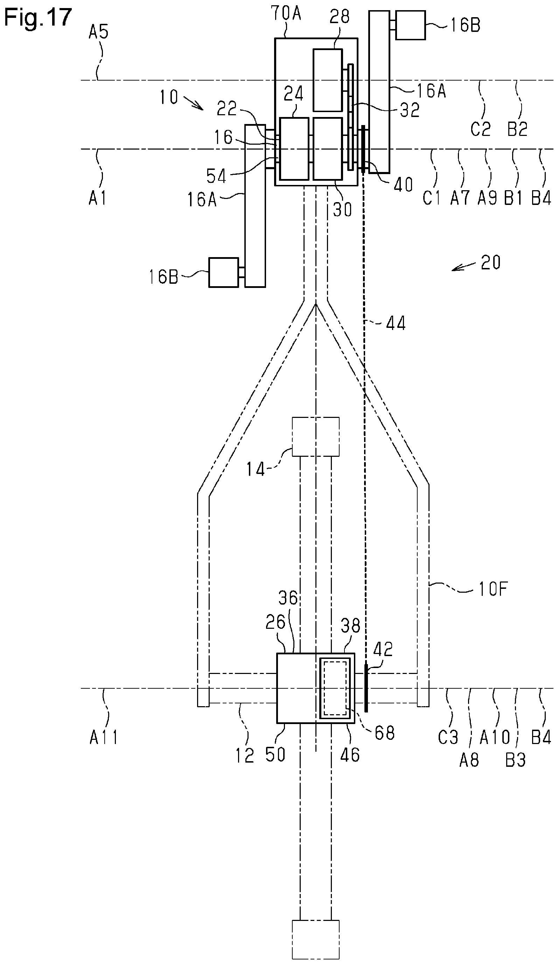

In the first embodiment, the drive unit 50 can be provided on the axle 12 of the wheel 14 of the human-powered vehicle 10. In an example, as shown in Figs. 4 and 17, the drive unit 50 further includes the hub shell 38. In an example, the drive unit 50 includes the rotation output unit 26. In this modified example, the rotation output unit 26 is the hub shell 38. In this modified example, the housing 36 includes the hub shell 38. In this modified example, the speed increaser 24, the motor 28, the transmission device 30, and the motor speed reducer 32 are provided on the additional housing 70A. In this modified example, the speed reducer 34 is at least partially disposed in an inner cavity of the hub shell 38. In an example, the speed reducer 34 includes a planetary gear mechanism 68. The planetary gear mechanism 68 is disposed in the inner cavity of the hub shell 38. In this modified example, the speed reducer 34 includes the speed reducer rotational center axis A11, the speed reducer rotation input unit 34A, and the speed reducer rotation output unit 34B. In an example, the speed reducer rotational center axis A11 is substantially coaxial with the rotational center axis C3 of the axle 12. The speed reducer rotation input unit 34A is rotatable about the speed reducer rotational center axis A11. The speed reducer rotation output unit 34B is rotatable about the speed reducer rotational center axis A11. The speed reducer rotational center axis A11 is substantially coaxial with the rotational center axis C3. In an example, the transmission device 30 is disposed to output human driving force to the rotation input unit 22. In an example, the rotation input unit 22 includes the drive rotation output unit 42.

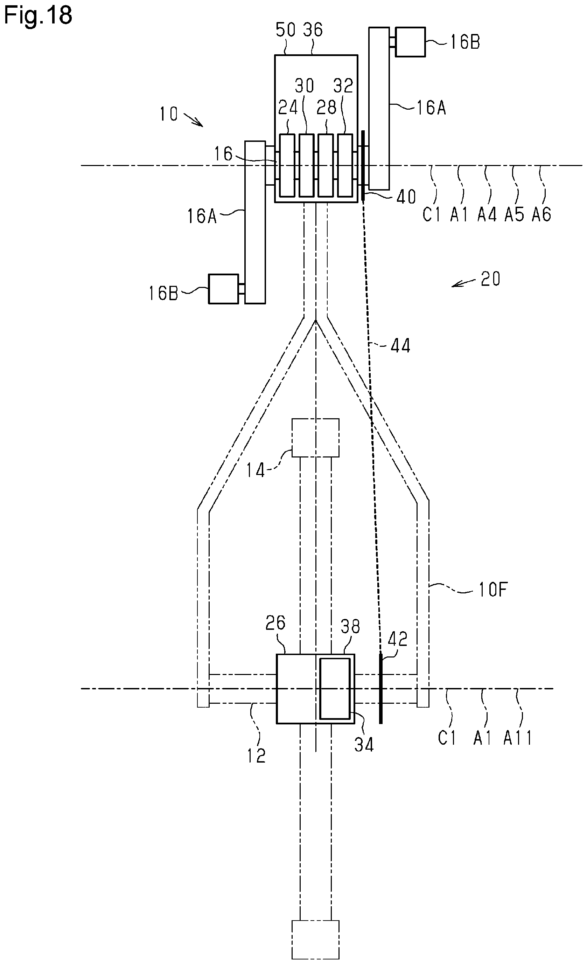

In the third embodiment, the speed reducer 34 can be provided on the hub shell 38. In an example, as shown in Fig. 18, the speed reducer 34 is at least partially provided on the axle 12 of the wheel 14 of the human-powered vehicle 10. The speed reducer 34 includes the speed reducer rotational center axis A11, the speed reducer rotation input unit 34A, and the speed reducer rotation output unit 34B. In an example, the speed reducer rotation input unit 34A is rotatable about the speed reducer rotational center axis A11. In an example, the speed reducer rotation output unit 34B is rotatable about the speed reducer rotational center axis A11. The speed reducer rotational center axis A11 is substantially coaxial with the rotational center axis C3. In this modified example, the speed increaser rotational center axis A1, the transmission device rotational center axis A4, and the motor rotational axis A5 differ from the speed reducer rotational center axis A11. In an example, three or more of the speed increaser rotational center axis A1, the transmission device rotational center axis A4, the speed reducer rotational center axis A11, and the motor rotational axis A5 that are substantially coaxial with each other are substantially coaxial with the input center axis C1. In this modified example, the speed increaser rotational center axis A1, the transmission device rotational center axis A4, and the motor rotational axis A5 are substantially coaxial with the input center axis C1.

In the fifth embodiment, for example, the speed increaser rotation input unit 24A can include a first pulley, the speed increaser rotation output unit 24B can include a second pulley, and the endless looped member 72A can include a belt. The second speed increaser 72 can include a belt-type speed-increasing mechanism.

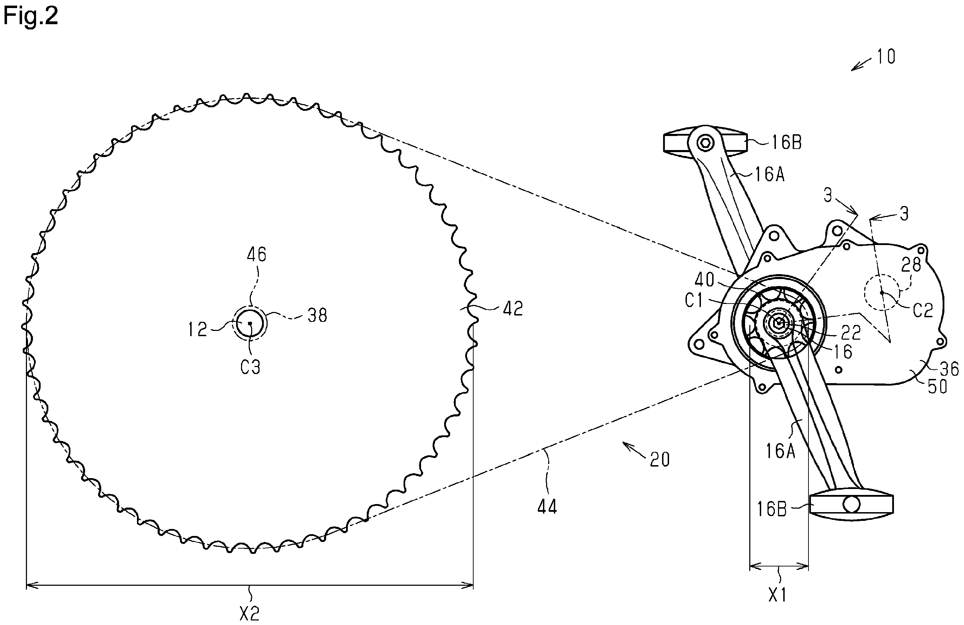

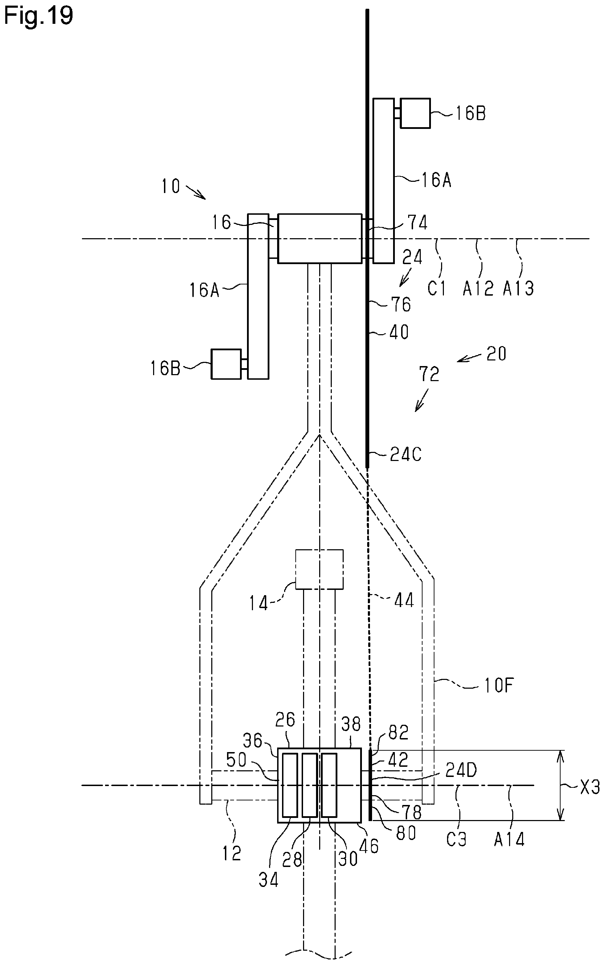

In the fifth embodiment, the first speed increaser 70 can be omitted from the speed increaser 24. Fig. 19 shows an example of the speed increaser 24 that includes a speed increaser input unit 24C, a speed increaser output unit 24D, and the endless annular member 44. In the present embodiment, the speed increaser input unit 24C is configured to receive human driving force via the input rotation shaft 54. The speed increaser input unit 24C includes one of a sprocket 82 and a pulley. The speed increaser output unit 24D includes one of a sprocket 82 and a pulley. In an example, one of a sprocket 82 and a pulley is the sprocket 82. One of a sprocket 82 and a pulley includes teeth. The sprocket 82 includes teeth. The number of teeth is, for example, 10 or less. The number of teeth is, for example, 9 or less. The number of teeth is, for example, 9. One of a sprocket 82 and a pulley has a pitch diameter X3 of, for example, 38 mm or less. In an example, the pitch diameter X3 of the sprocket 82 is 38 mm or less. The drive rotation input unit 40 shown in Fig. 2 is an example of the sprocket 82 in which the number of teeth is 10 or less and the pitch diameter X3 is 38 mm or less.

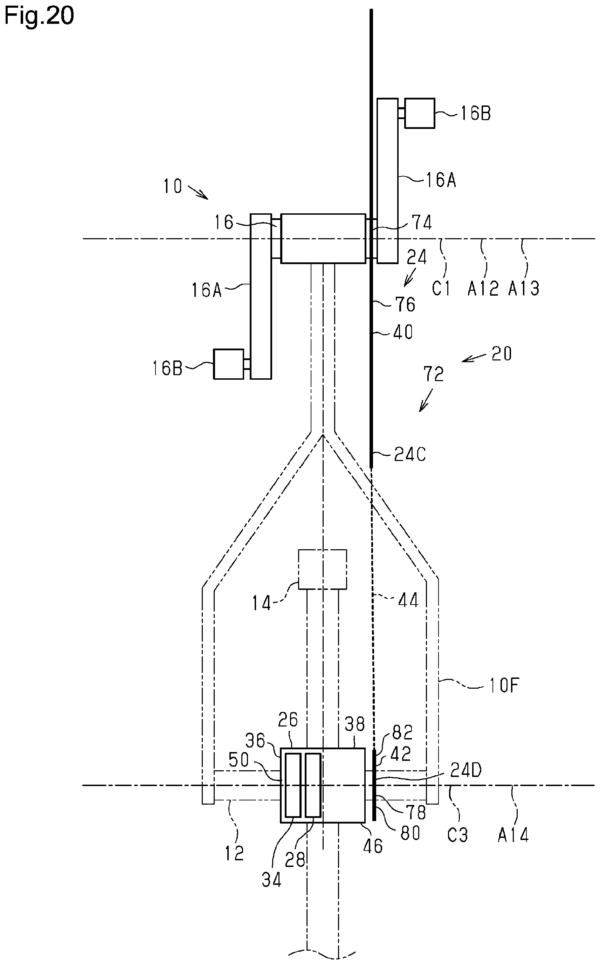

In the fifth embodiment, both the first speed increaser 70 and the motor 28 can be omitted from the speed increaser 24. In an example, as shown in Fig. 20, the motor 28 and the motor speed reducer 32 can be omitted from the drive unit 50. In the modified example, the net force unit 52 is configured to receive only human driving force.

As long as the drive unit 50 includes the rotation input unit 22 provided on the axle 12 of the wheel 14 of the human-powered vehicle 10 and configured to receive human driving force, the rotation output unit 26 configured to receive human driving force via the rotation input unit 22 and output human driving force to the wheel 14 of the human-powered vehicle 10, and the speed reducer 34 provided in the transmission path of human driving force between the rotation input unit 22 and the rotation output unit 26, and the reduction ratio of the speed reducer 34 is greater than 0 and 0.65 or less, the remaining components can be omitted. In this modified example, the sequence of transmission of human driving force can be changed among the speed increaser 24, the transmission device 30, and the speed reducer 34.

As long as the drive unit 50 includes the speed increaser 24 provided on the axle 12 of the wheel 14 of the human-powered vehicle 10 and configured to receive human driving force, the transmission device 30 having the transmission stages and configured to receive human driving force via the speed increaser 24, and the speed reducer 34 configured to receive human driving force via the transmission device 30, the remaining components can be omitted.

As long as the drive unit 50 includes the speed increaser 24 configured to receive human driving force and the transmission device 30 having the transmission stages and configured to receive human driving force via the speed increaser 24, and the speed-increasing ratio of the speed increaser 24 is 3 or greater and 11 or less, the remaining components can be omitted. In this modified example, in a case where the transmission device 30 is provided downstream of the speed increaser 24 in the transmission path of human driving force, the sequence of transmission of human driving force can be changed among the speed increaser 24, the transmission device 30, and the speed reducer 34.

As long as the drive unit 50 includes the speed increaser 24 configured to receive human driving force, the speed increaser 24 includes the speed increaser rotation input unit 24A configured to receive human driving force and the speed increaser rotation output unit 24B configured to output human driving force, the speed increaser rotation input unit 24A includes the speed increaser input rotational axis A2, the speed increaser rotation output unit 24B includes the speed increaser output rotational axis A3 coaxial with the speed increaser input rotational axis A2, and the speed-increasing ratio of the speed increaser 24 is 3 or greater and 20 or less, the remaining components can be omitted. In this modified example, the sequence of transmission of human driving force can be changed among the speed increaser 24, the transmission device 30, and the speed reducer 34.

As long as the drive unit 50 includes the motor 28 configured to apply propulsion force to the human-powered vehicle 10 and the motor speed reducer 32 configured to output motor driving force from the motor 28 to the transmission path of human driving force, and the motor reduction ratio of the motor speed reducer 32 is 0.125 or greater and less than 1, the remaining components can be omitted. In this modified example, the sequence of transmission of human driving force can be changed among the speed increaser 24, the transmission device 30, and the speed reducer 34. In this modified example, in a case where motor driving force is added downstream of the speed increaser 24, the configuration of the net force unit 52 for motor driving force and human driving force can be changed.

As long as the drive system 20 includes the rotation input unit 22 configured to receive human driving force, the speed increaser 24 configured to receive human driving force via the rotation input unit 22, the rotation output unit 26 configured to receive human driving force via the speed increaser 24, and the motor 28 configured to apply propulsion force to the human-powered vehicle 10, the motor 28 is configured to output motor driving force to the transmission path of human driving force between the speed increaser 24 and the rotation output unit 26, and the speed-increasing ratio of the speed increaser 24 is 3 or greater and 20 or less, the remaining components can be omitted. In this modified example, the sequence of transmission of human driving force can be changed among the speed increaser 24, the transmission device 30, and the speed reducer 34. In this modified example, in a case where motor driving force is added to the transmission path of human driving force downstream of the speed increaser 24, the configuration of the net force unit 52 for motor driving force and human driving force can be changed.

As long as the drive system 20 includes the rotation input unit 22 configured to receive human driving force, the speed increaser 24 configured to receive human driving force via the rotation input unit 22, the speed reducer 34 configured to receive human driving force via the speed increaser 24, and the motor 28 configured to apply propulsion force to the human-powered vehicle 10, and the motor 28 is configured to output motor driving force to the transmission path of human driving force between the speed increaser 24 and the speed reducer 34, the remaining components can be omitted. In this modified example, in a case where the speed reducer 34 is provided downstream of the speed increaser 24 in the transmission path of human driving force, the sequence of transmission of human driving force can be changed among the speed increaser 24, the transmission device 30, and the speed reducer 34.

As long as the drive system 20 includes the motor 28 configured to apply propulsion force to the human-powered vehicle 10 and the speed reducer 34 configured to receive motor driving force from the motor 28 and receive human driving force, and the reduction ratio of the speed reducer 34 is greater than 0 and less than 1, the remaining components can be omitted. In this modified example, the sequence of transmission of human driving force can be changed among the speed increaser 24, the transmission device 30, and the speed reducer 34. In this modified example, in a case where motor driving force is added to the transmission path of human driving force upstream of the speed reducer 34, the configuration of the net force unit 52 for motor driving force and human driving force can be changed.

As long as the drive unit 50 includes the housing 36, the speed increaser 24 provided in the housing 36 and configured to receive human driving force, the transmission device 30 provided in the housing 36, having the transmission stages, and configured to receive human driving force via the speed increaser 24, and the motor 28 configured to apply propulsion force to the human-powered vehicle 10, the speed increaser 24 includes the speed increaser rotational center axis A1, the speed increaser rotation input unit 24A rotatable about the speed increaser rotational center axis A1, and the speed increaser rotation output unit 24B rotatable about the speed increaser rotational center axis A1, the transmission device 30 includes the transmission device rotational center axis A4, the transmission device rotation input unit 30A rotatable about the transmission device rotational center axis A4, and the transmission device rotation output unit 30B rotatable about the transmission device rotational center axis A4, the motor 28 includes the motor rotational axis A5, and the speed increaser rotational center axis A1, the transmission device rotational center axis A4, and the motor rotational axis A5 are substantially coaxial with each other, the remaining components can be omitted. In this modified example, in a case where the transmission device 30 is provided downstream of the speed increaser 24 in the transmission path of human driving force, the sequence of transmission of human driving force can be changed among the speed increaser 24, the transmission device 30, and the speed reducer 34. In this modified example, the configuration of the net force unit 52 for motor driving force and human driving force can be changed.

As long as the drive unit 50 includes the housing 36, the speed increaser 24 provided on the housing 36 and configured to receive human driving force, the transmission device 30 provided on the housing 36, having the transmission stages, and configured to receive human driving force via the speed increaser 24, the speed reducer 34 provided on the housing 36 and configured to receive human driving force via the transmission device 30, and the motor 28 configured to apply propulsion force to the human-powered vehicle 10, the speed increaser 24 includes the speed increaser rotational center axis A1, the speed increaser rotation input unit 24A rotatable about the speed increaser rotational center axis A1, and the speed increaser rotation output unit 24B rotatable about the speed increaser rotational center axis A1, the transmission device 30 includes the transmission device rotational center axis A4, the transmission device rotation input unit 30A rotatable about the transmission device rotational center axis A4, and the transmission device rotation output unit 30B rotatable about the transmission device rotational center axis A4, the speed reducer 34 includes the speed reducer rotational center axis A11, the speed reducer rotation input unit 34A rotatable about the speed reducer rotational center axis A11, and the speed reducer rotation output unit 34B rotatable about the speed reducer rotational center axis A11, the motor 28 includes the motor rotational axis A5, and three or more of the speed increaser rotational center axis A1, the transmission device rotational center axis A4, the speed reducer rotational center axis A11, and the motor rotational axis A5 are substantially coaxial with each other, the remaining components can be omitted. In this modified example, the configuration of the net force unit 52 for motor driving force and human driving force can be changed.

As long as the drive system 20 includes the speed increaser 24, the speed increaser 24 includes the speed increaser rotation input unit 24A configured to receive, via the input rotation shaft 54 configured to receive human driving force, the human driving force, the speed increaser rotation output unit 24B configured to output human driving force to the wheel 14 of the human-powered vehicle 10, and the endless looped member 72A coupling the speed increaser rotation input unit 24A and the speed increaser rotation output unit 24B, and the speed-increasing ratio of the speed increaser 24 is 3 or greater and 20 or less, the remaining components can be omitted. In this modified example, the sequence of transmission of human driving force can be changed among the speed increaser 24, the transmission device 30, and the speed reducer 34.

As long as the drive system 20 includes the first speed increaser 70 configured to receive, via the input rotation shaft 54 configured to receive human driving force, the human driving force, and the second speed increaser 72 configured to receive human driving force via the first speed increaser 70, the second speed increaser 72 includes the speed increaser rotation input unit 24A configured to receive human driving force via the first speed increaser 70 and including the rotational shaft center axis A12 and the speed increaser rotation output unit 24B configured to output human driving force to the wheel 14 of the human-powered vehicle 10, the endless looped member 72A coupling the speed increaser rotation input unit 24A and the speed increaser rotation output unit 24B, the first speed increaser 70 is at least partially provided at a radially inner side of the speed increaser rotation input unit 24A with respect to the rotational shaft center axis A12, the speed-increasing ratio of the first speed increaser 70 and the second speed increaser 72 is 3 or greater and 20 or less, the remaining components can be omitted. In this modified example, the second speed increaser 72 is provided downstream of the first speed increaser 70 in the transmission path of human driving force, the sequence of transmission of human driving force can be changed among the first speed increaser 70, the second speed increaser 72, the transmission device 30, and the speed reducer 34.

As long as the drive system 20 includes the speed increaser 24, the speed increaser 24 includes the speed increaser input unit 24C configured to receive, via the input rotation shaft 54 configured to receive human driving force, the human driving force, the speed increaser output unit 24D configured to output human driving force to the wheel 14 of the human-powered vehicle 10, and the endless looped member 72A coupling the speed increaser input unit 24C and the speed increaser output unit 24D, the speed increaser output unit 24D includes at least one of the sprocket 82 and the pulley, one of the sprocket 82 and the pulley includes teeth, and the number of teeth is 10 or less, the remaining components can be omitted. In this modified example, the sequence of transmission of human driving force can be changed among the speed increaser 24, the transmission device 30, and the speed reducer 34.

As long as the drive system 20 includes the drive rotation input unit 40 having a single pitch circle configured to receive human driving force via the input rotation shaft 54, which is configured to receive human driving force, the drive rotation output unit 42 having a single pitch circle configured to output human driving force to the wheel 14 of the human-powered vehicle 10, and the endless annular member 44 coupling the drive rotation input unit 40 and the drive rotation output unit 42, and the pitch circle ratio of the input pitch diameter X1 of the drive rotation input unit 40 to the output pitch diameter X2 of the drive rotation output unit 42 is greater than 0 and 1 or less, the remaining components can be omitted. In this modified example, the sequence of transmission of human driving force can be changed among the speed increaser 24, the transmission device 30, and the speed reducer 34.

As long as the drive unit 50 includes the transmission device 30 provided in the transmission path of human driving force, the transmission device 30 includes at least four transmission stages, the transmission device 30 includes the transmission device rotational center axis A4, the transmission device rotation input unit 30A rotatable about the transmission device rotational center axis A4, and the transmission device rotation output unit 30B rotatable about the transmission device rotational center axis A4, the maximum dimension Y1 of the transmission device 30 in a direction orthogonal to the transmission device rotational center axis A4 is 80 mm or less, and the maximum dimension Y2 of the transmission device 30 in a direction parallel to the transmission device rotational center axis A4 is 30 mm or less, the remaining components can be omitted. In this modified example, the sequence of transmission of human driving force can be changed among the speed increaser 24, the transmission device 30, and the speed reducer 34.

As long as the drive unit 50 includes the housing 36 configured to support the input rotation shaft 54, which is configured to receive human driving force, and the transmission device 30 provided on the housing 36 and configured to receive human driving force via the input rotation shaft 54, the transmission device 30 includes the transmission device rotational center axis A4, the transmission device rotation input unit 30A rotatable about the transmission device rotational center axis A4, and the transmission device rotation output unit 30B rotatable about the transmission device rotational center axis A4, the maximum dimension Y1 of the transmission device 30 in a direction orthogonal to the transmission device rotational center axis A4 is 80 mm or less, and the maximum dimension Y2 of the transmission device 30 in a direction parallel to the transmission device rotational center axis A4 is 30 mm or less, the remaining components can be omitted. In this modified example, the sequence of transmission of human driving force can be changed among the speed increaser 24, the transmission device 30, and the speed reducer 34.

As long as the drive unit 50 includes the transmission device 30 provided in the transmission path of human driving force, the transmission device 30 includes the first planetary assembly 62 and the second planetary assembly 64 connected to the first planetary assembly 62, the first planetary assembly 62 and the second planetary assembly 64 share the common transmission device rotational center axis A4, the maximum dimension Y1 of the transmission device 30 in a direction orthogonal to the transmission device rotational center axis A4 is 80 mm or less, and the maximum dimension Y2 of the transmission device 30 in a direction parallel to the transmission device rotational center axis A4 is 30 mm or less, the remaining components can be omitted. In this modified example, the sequence of transmission of human driving force can be changed among the speed increaser 24, the transmission device 30, and the speed reducer 34.

As long as the drive unit 50 is provided on the axle 12 of the wheel 14 of the human-powered vehicle 10 and includes the transmission device 30 having the transmission stages, provided in the transmission path of human driving force, and configured to shift the transmission ratio of the human-powered vehicle 10, the speed reducer 34 configured to receive human driving force via the transmission device 30, and the rotation output unit 26 connected to the wheel 14 and configured to output human driving force, received from the speed reducer 34, to the wheel 14, and the reduction ratio of the speed reducer 34 is greater than 0 and less than 1, the remaining components can be omitted. In this modified example, in a case where the speed reducer 34 is provided downstream of the transmission device 30 in the transmission path of human driving force, the sequence of transmission of human driving force can be changed among the speed increaser 24, the transmission device 30, and the speed reducer 34.

In each embodiment that includes the motor 28, the drive unit 50 can include a control device configured to control the motor 28. In an example, the control device is accommodated in the housing 36. The control device includes a processor that executes a predetermined control program. The processor includes, for example, a central processing unit (CPU) or a micro processing unit (MPU). In an example, the control device further includes an inverter circuit controlled by the processor. The inverter circuit is electrically connected to the processor and the motor. In each embodiment that includes the motor 28, the drive unit 50 can further include a torque sensor configured to output a signal in accordance with human driving force input to the crank axle 16. In an example, the control device is configured to control the motor 28 in accordance with a detection result of torque sensor. The method for controlling the motor 28 by the control device can be various and is not limited particularly. The torque sensor can be a known sensor such as a strain sensor or magnetostrictive sensor and thus will not be described in detail. In an example, the torque sensor can be provided on the input transfer portion 22A or the two crank arms 16A.

In this specification, the phrase "at least one of' as used in this disclosure means "one or more" of a desired choice. As one example, the phrase "at least one of' as used in this disclosure means "only one choice" or "both of two choices" in a case where the number of choices is two. In another example, in this specification, the phrase "at least one of" as used in this disclosure means "only one single choice" or "any combination of equal to or more than two choices" if the number of its choices is equal to or more than three.

### REFERENCE CHARACTERS

10) human-powered vehicle
12) axle
14) wheel
16) crank axle
24) speed increaser
24A) speed increaser rotation input unit
24B) speed increaser rotation output unit
28) motor
30) transmission device
30C) transmission device input unit
30D) transmission device output unit
34) speed reducer
50) drive unit

## Claims

1. A drive unit (50) for a human-powered vehicle provided on an axle (12) of a wheel (14) of the human-powered vehicle, the drive unit (50) comprising:
a speed increaser (24) configured to receive human driving force;
a transmission device (30) including transmission stages and configured to receive the human driving force via the speed increaser (24); and
a speed reducer (34) configured to receive the human driving force via the transmission device (30).

2. The drive unit (50) according to claim 1, wherein the speed reducer (34) has a reduction ratio that is greater than 0 and 0.8 or less, preferably the reduction ratio is 0.1 or greater and 0.5 or less, more preferably the reduction ratio is 0.15 or greater and 0.3 or less.

3. The drive unit (50) according to claim 1 or 2, wherein at least one of the speed increaser (24), the transmission device (30), and the speed reducer (34) includes a metal material.

4. The drive unit (50) according to any one of claims 1 to 3, wherein at least one of the speed increaser (24), the transmission device (30), and the speed reducer (34) includes a resin material.

5. A drive unit (50) for a human-powered vehicle, the drive unit (50) comprising:
a speed increaser (24) configured to receive human driving force; and
a transmission device (30) including transmission stages and configured to receive the human driving force via the speed increaser (24),
wherein the speed increaser (24) has a speed-increasing ratio of 3 or greater and 11 or less.

6. The drive unit (50) according to claim 5, wherein the speed increaser (24) includes at least one of a gear, a pulley, and an endless annular member.

7. The drive unit (50) according to any one of claims 1 to 6, wherein:
the transmission stages each have a different transmission ratio;
the transmission device (30) includes
a transmission device input unit (30C) configured to receive the human driving force, and
a transmission device output unit (30D) configured to output the human driving force;
the transmission ratio is a ratio of a rotational speed of the transmission device output unit (30D) to a rotational speed of the transmission device input unit (30C); and
a ratio of a maximum transmission ratio of the transmission ratios of the transmission stages to a minimum transmission ratio of the transmission ratios of the transmission stages is 1.2 or greater and 8 or less.

8. The drive unit (50) according to claim 7, wherein the ratio of the maximum transmission ratio to the minimum transmission ratio is 1.7 or greater and 7 or less, preferably the ratio of the maximum transmission ratio to the minimum transmission ratio is 2.4 or greater and 6 or less.

9. The drive unit (50) according to any one of claims 1 to 6, wherein:
the transmission stages each have a different transmission ratio;
the transmission device (30) includes
a transmission device input unit (30C) configured to receive the human driving force, and
a transmission device output unit (30D) configured to output the human driving force;
the transmission ratio is a ratio of a rotational speed of the transmission device output unit (30D) to a rotational speed of the transmission device input unit (30C);
the transmission stages include a first transmission stage of which the transmission ratio is a first ratio and a second transmission stage of which the transmission stage is a second ratio;
the second ratio is the one of the transmission ratios of the transmission stages that is greater than the first ratio and closest to the first ratio; and
a ratio of the first ratio to the second ratio is 0.75 or greater and less than 1.

10. The drive unit (50) according to claim 9, wherein the ratio of the first ratio to the second ratio is 0.8 or greater and less than 1, preferably the ratio of the first ratio to the second ratio is 0.85 or greater and less than 1.

11. A drive unit (50) for a human-powered vehicle, the drive unit (50) comprising:
a speed increaser (24) configured to receive human driving force, wherein
the speed increaser (24) includes a speed increaser rotation input unit (24A) configured to receive the human driving force and a speed increaser rotation output unit (24B) configured to output the human driving force;
the speed increaser rotation input unit (24A) includes a speed increaser input rotational axis;
the speed increaser rotation output unit (24B) includes a speed increaser output rotational axis aligned coaxially with the speed increaser input rotational axis; and
wherein the speed increaser (24) has a speed-increasing ratio of 3 or greater and 20 or less.

12. The drive unit (50) according to any one of claims 5, 6, and 11, wherein the speed-increasing ratio is 5 or greater and 18 or less, preferably the speed-increasing ratio is 7 or greater and 16 or less, more preferably the speed-increasing ratio is 9 or greater and 14 or less.

13. A drive unit (50) for a human-powered vehicle, the drive unit (50) comprising:
a speed increaser (24) configured to receive human driving force,
wherein the speed increaser (24) has a speed-increasing ratio of 6 or greater and 20 or less.

14. The drive unit (50) according to any one of claims 1 to 13, further comprising a crank axle (16) of the human-powered vehicle.

15. The drive unit (50) according to any one of claims 1 to 14, further comprising a motor (28) configured to apply propulsion force to the human-powered vehicle.
